(19) Europäisches Patentamt
European Patent Office
Office européen des brevets

(11) **EP 3 902 855 B1**

(12) **EUROPEAN PATENT SPECIFICATION**

(45) Date of publication and mention of the grant of the patent:
**06.05.2026 Bulletin 2026/19**

(21) Application number: **19806260.6**

(22) Date of filing: **25.11.2019**

(51) International Patent Classification (IPC):
**C08L 9/02** *(2006.01)*    **B60C 1/00** *(2006.01)*
**C08F 2/00** *(2006.01)*

(52) Cooperative Patent Classification (CPC):
**C08F 236/12; B60C 1/0016; C08F 236/14;**
**C08L 9/02;** Y02T 10/86

(86) International application number:
**PCT/EP2019/082475**

(87) International publication number:
**WO 2020/135956 (02.07.2020 Gazette 2020/27)**

(54) **PULVERULENT MIXTURE OF PRECROSSLINKED NITRILE RUBBERS**

PULVERFÖRMIGE MISCHUNG VORVERNETZTER NITRILKAUTSCHUKE

MÉLANGE EN POUDRE DES CAOUTCHOUCS NITRILES PRÉRÉTICULÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2018 EP 18248065**

(43) Date of publication of application:
**03.11.2021 Bulletin 2021/44**

(73) Proprietor: **ARLANXEO Deutschland GmbH**
**41540 Dormagen (DE)**

(72) Inventors:
- **BRANDAU, Sven**
  **50859 Köln (DE)**
- **STAEBER, Robert**
  **35085 Ebsdorfergrund (DE)**
- **RUENZI, Thomas**
  **40223 Düsseldorf (DE)**

(56) References cited:
EP-A1- 0 669 370       EP-A1- 3 053 938
JP-A- 2006 089 552     US-A1- 2018 079 886

## Description

## Field of Invention

The present invention relates to pulverulent mixtures based on specific nitrile rubbers and at least one separating agent, and also to a process for producing vulcanizable mixtures and vulcanizates from these pulverulent mixtures, and to the resultant vulcanizates and the use thereof, especially in tyre treads.

## Background of Invention

Nitrile rubbers, also abbreviated to "NBR", are understood to mean rubbers which are co- or terpolymers of at least one $\alpha,\beta$-unsaturated nitrile, at least one conjugated diene and optionally one or more further copolymerizable monomers. Such nitrile rubbers and processes for producing such nitrile rubbers have been known for many decades.

NBR is typically produced by emulsion polymerization, at first giving an NBR latex. The NBR solids are isolated from this latex by coagulation, usually using salts or acids. The solid rubbers thus obtained can be converted to powder form by grinding. In an alternative workup, the NBR powder is obtained directly from the latex by spray drying. The emulsion polymerization typically has to be conducted using molecular weight regulators in order to obtain polymers having good processing properties.

Processes for producing nitrile rubbers have long been known; the polymerization is typically conducted as an emulsion polymerization and can be free-radically initiated by azo initiators, persulfates, organic peroxides or redox systems.

The production of precrosslinked nitrile rubbers is typically effected in the latex state and can be achieved firstly during the polymerization by continuing the polymerization up to high conversions, and after the polymerization by crosslinking or by copolymerization with crosslinking polyfunctional compounds. It is also possible to prepare precrosslinked nitrile rubbers by polymerization in the absence of molecular weight regulators.

DE19701487A1 describes the production of such precrosslinked nitrile rubbers by adding peroxides to an uncrosslinked copolymer latex of acrylonitrile and butadiene in an autoclave and then crosslinking the polymer at elevated temperature via the presence of the peroxide for several hours.

It is not stated whether any pulverulent precrosslinked nitrile rubbers of this kind have a positive effect on wet skid resistance, dry grip or rolling resistance in the case of use in tyres.

EP0842708A1 describes the production of precrosslinked nitrile rubbers by polymerization of acrylonitrile, butadiene and a polyfunctional monomer. A wide variety of different polyfunctional monomers that can be used for production of precrosslinked nitrile rubbers are listed, such as trimethylolpropane trimethacrylate (TMPTMA), divinylbenzene (DVB) or butane-1,4-diol dimethacrylate. These precrosslinked rubbers are processed together with various other constituents such as PVC and plasticizers to give a mixture which is used for the surface treatment of components. There is no description of use or production of pulverulent precrosslinked nitrile rubbers.

Pulverulent nitrile rubbers are in principle used in various applications. They are utilized, for example, in the modification of phenolic resins in the production of brake components, linings or discs. In addition, they are used for modification of thermoplastics, especially for modification of polyvinyl chloride (PVC), owing to excellent compatibility with this widely used plastic. Such elasticized PVCs are used, for example, for production of profiles, cable sheaths or seals. Various components of this kind are used in the automotive sector.

In principle, a number of rubbers are conceivable for production of elastomers in powder form, such as NBR, EPDM or SBR. Especially when a modification of PVC, polyurethanes or polyamides is desired (for example to increase impact resistance), nitrile rubbers are particularly suitable owing to excellent compatibility. Use in the form of rubber powders here enables better dosage and dispersion in the thermoplastic, and hence a more homogeneous profile of properties.

CN104193907A describes the production of thermally stable pulverulent nitrile rubbers by the use of N-phenyl amides in the polymerization. The coagulated rubber is finally ground, but directly processed further without further separating agents. There is no description of production of precrosslinked pulverulent nitrile rubbers through the use of crosslinking polyfunctional compounds during the polymerization, or crosslinking by addition of peroxides. There is no disclosure of the use of the powders in tyre treads nor of the effect of the powders on wet skid resistance, dry grip or rolling resistance in tyres.

CN101643528A describes the production of precrosslinked pulverulent nitrile rubbers by high conversions during the polymerization. No additional separating agents are added. The two acrylonitrile and butadiene monomers are polymerized in emulsion polymerizations up to conversions of 96% and the coagulation parameters are chosen such that finely divided particles are obtained directly, and these are subsequently dewatered in a centrifuge. There is no description of use of crosslinking polyfunctional compounds during the polymerization, nor of use of separating agents that assure clumping of the pulverulent nitrile rubbers over the desired period of storage. There is no description of possible employment of these precrosslinked nitrile rubbers, or of the properties thereof in tyre treads.

There have already been descriptions in publications and patents of use of nitrile rubbers in tyres, especially in tyre treads, but it has never been possible to achieve a simultaneous improvement in rolling resistance, dry grip and wet skid resistance coupled with improved filler dispersion by a simple and industrially implementable solution. All of the above are important properties for the tyre tread, and it is desirable to improve as many as possible of these properties by a simple addition.

Tire Industry 2013, 33, 543-547 describes a tyre study in which various nitrile rubbers and pulverulent nitrile rubbers are tested. Wet skid resistance in particular is assessed here. The addition of a phenol novolak together with linear nitrile rubber led to higher $\tan \delta$ values in the temperature range of 0-20°C, but a deterioration was observed in the region of 70°C. It can be concluded from this that wet skid resistance of the tyre improves, but rolling resistance deteriorates at the same time. A cause postulated for this effect is the formation of a homogeneous phase from the linear pulverulent nitrile rubber and novolak. Any influence on dry grip is generally not assessed.

JP56-163907 tests various pulverulent rubbers for tyre treads. By comparison with mixtures without SBR powders, there is an improvement in abrasion and wet skid resistance when SBR powders are used. Precrosslinked nitrile rubbers, optionally in pulverulent form, are not tested here. However, the measurements submitted, by contrast, show that wet skid resistance is improved, but rolling resistance is simultaneously adversely affected. No influence on mixing properties or dry grip is disclosed.

The use of three-dimensionally crosslinked particles consisting of an oligomer or polymer and having a particle diameter $D_a$ of 1-200 $\mu$m for tyre rubber mixtures that show excellent performance on ice or in tyres is described in DE112012001835T5. Various three-dimensionally crosslinked particles are produced here and added to an NR/BR tyre mixture. An improvement in abrasion and a relative improvement on ice are achieved here, but nothing is said about wet skid resistance or rolling resistance. Furthermore, the three-dimensionally crosslinked particles consist mainly of oligomers or polymers having a terminal hydrolysable silyl group, not of nitrile rubbers of any kind.

CN103965530A describes the use of crosslinked pulverulent nitrile rubbers. What is described here is the precrosslinking of the nitrile rubbers by irradiation of the NBR latex that has not yet been precrosslinked by further termonomers by means of $\gamma$ radiation using TMPTMA. These latices are mixed directly with various SBR latices and inorganic separating agents are added, before these mixtures are ultimately coagulated so as to give finely divided powders. It is stated that the rubber powders formed have a particle diameter of 50-200 nm, i.e. 0.00005-0.0002 mm. These powder mixtures do show an improvement in rolling resistance and wet skid characteristics in further tests, but the complicated process of crosslinking by means of $\gamma$ radiation and the use of nanosized particles present considerable difficulties (some relating to health) to the user and producers. Furthermore, such processes cannot be employed on the industrial scale. No positive effect on dry grip or mixing characteristics is shown.

In EP2882512A, rubber latices are likewise crosslinked by means of $\gamma$ radiation using TMPTMA and these are added to an SBR 1502 latex at up to 5 phr in a defined process step. Here too, finely divided nanoparticulate powders within a size range of 20-500 nm are obtained. As well as the known mixtures of SBR and precrosslinked NBR by $\gamma$ radiation using TMPTMA, mixtures of linear SBR and precrosslinked SBR are also examined here. All the inventive powder mixtures of EP2882512A do show an improvement in rolling resistance and wet skid characteristics in tests, but production is possible only with considerable complexity. Furthermore, no positive effect on dry grip or mixing characteristics is shown here either.

US 2018/079886 discloses in the experimental section nitrile rubbers not containing a free-radically polymerizable compound having at least three olefinic double bonds per molecule.

EP 0 669 370 fails to disclose pulverulent mixture has an average particle diameter $D_a$ in the range from 0.06 mm to 0.75 mm.

In summary, it can be stated that there has been no description to date of any measures or methods which enables the simple production of pulverulent precrosslinked nitrile rubbers that can be utilized for production of tyre treads, in which there is simultaneous improvement in wet skid resistance, dry grip and rolling resistance, with good mixing characteristics.

## Summary of Invention

The problem addressed by the present invention is that of providing nitrile rubber-based mixtures that are suitable for production of vulcanizates, especially for tyre treads, and at the same time enable an improvement in wet skid resistance, dry grip and rolling resistance with simultaneously good mixing characteristics.

It has been found that, surprisingly, mixtures of specific nitrile rubbers with at least one separating agent are suitable for production of tyre treads, and use thereof gives the desired combined improvement in wet skid resistance, dry grip and rolling resistance with simultaneously good mixing characteristics.

In a first aspect the present invention relates to a pulverulent mixture. The pulverulent mixture comprising

at least one nitrile rubber containing repeat units

- of at least one $\alpha,\beta$-unsaturated nitrile monomer selected from the group consisting of acrylonitrile, methacrylonitrile, ethacrylonitrile and mixtures thereof,

- of at least one conjugated diene monomer selected from the group consisting of 1,3-butadiene, isoprene, 2,3-dimethylbutadiene, piperylene and mixtures thereof, and

- of at least one free-radically polymerizable compound having at least three olefinic double bonds per molecule wherein the free-radically polymerizable compound containing at least three olefinic double bonds per molecule is trimethylolpropane tri(meth)acrylate, wherein the proportion of the free-radically polymerizable compounds having at least three olefinic double bonds per molecule is in the range from 0.5% to 5% by weight, based on the overall polymer,

and

at least one separating agent, wherein the at least one separating agent is selected from the group consisting of

- silicas having a specific BET surface area of more than 5 $m^2$/g, which have especially been chemically modified,
- silicates being talc, mica, bentonites or montmorillonites,
- fatty acid salts being alkali metal and alkaline earth metal salts of fatty acids having more than 10 carbon atoms,
- polymers having a high glass transition temperature of more than 60°C, and
- mixtures of the aforementioned separating agents;

wherein 0.25 to 45 phr of the at least one separating agent, based on the nitrile rubber, is used;

wherein the pulverulent mixture has an average particle diameter $D_a$ in the range from 0.06 mm to 0.75 mm; and

the preparation of the pulverulent mixture comprises either a grinding step or else a spray drying step, in the course of each of which the contacting with the at least one separating agent is effected, in the case of the grinding step, the nitrile rubber is first produced by emulsion polymerization, the resultant latex of the nitrile rubber is subjected to coagulation, and the coagulated nitrile rubber is washed, dried and then subjected to grinding, where the at least one separating agent is added in one or more portions during the grinding operation,

in the case of the spray drying step, the nitrile rubber is first produced by emulsion polymerization, the resultant latex of the nitrile rubber, for the purpose of removing the water, is subjected to spray drying in a spray tower, and the at least one separating agent is either supplied to the spray tower as dry powder or else metered directly into the latex prior to the spray drying.

In a further aspect the present invention relates to a vulcanizable mixture comprising the pulverulent mixture and at least one crosslinker.
In a further aspect the present invention relates to a process for producing vulcanizable mixtures, wherein the pulverulent mixture is contacted with at least one crosslinker.
In a further aspect the present invention relates to a process for producing vulcanizates, wherein the vulcanizable mixture is subjected to vulcanization in the course of a shaping process, using rolls, kneaders, internal mixers and mixing extruders, calenders and mould presses.
The vulcanizates based on the pulverulent mixture according to the invention, in tyre treads, show unusually high damping at temperatures of -20°C to +30°C and unusually low damping at temperatures of 40°C to 80°C, and are therefore of particularly good suitability for the production of passenger vehicle tyre treads with high wet skid resistance and low rolling resistance.

## Detailed Description

It should be appreciated that the various aspects and embodiments of the detailed description as disclosed herein are illustrative of the specific ways to make and use the invention and do not limit the scope of invention when taken into consideration with the claims and the detailed description. It will also be appreciated that features from different aspects and embodiments of the invention may be combined with features from different aspects and embodiments of the invention.

The average particle diameter $D_a$ of the pulverulent mixture according to the invention is determined by granulometry, by weighing out 100 g of the pulverulent mixture in a sieve having a mesh size of 2.0 mm, positioning further sieves having mesh sizes of 1.4; 1.0; 0.8; 0.6 and 0.3 mm below this first sieve, clamping the assembled sieves in a vibration sieve machine (e.g. AS 200 control, from Retsch) and agitating them with an amplitude of 2.00 mm for a period of 30 min, then weighing the contents of each sieve and calculating the average particle diameter $D_a$ by the formula (1)

$$D_a = \sum(X_i D_i)/100 \ (1)$$

in which

$D_a$     denotes the average particle diameter in mm
$X_i$     denotes the % by weight of the mass of the pulverulent mixture retained in the respective sieve in g
$D_i$     denotes the average mesh size of the respective sieve n and n+1 in mm that results from the following formula (2)

$$D_i = (D_n + D_{(n+1)})/2 \ (2)$$

in which

$D_n$     is the mesh diameter of the sieve n in mm, and
$D_{(n+1)}$     is the mesh diameter of the sieve n+1 in mm.

In a further embodiment, the pulverulent mixtures according to the invention have an average particle diameter $D_a$ in the range from especially preferably in the range from 0.08 mm to 0.6 mm. These pulverulent mixtures are obtainable, for example, when precrosslinked nitrile rubbers obtainable by spray drying are used.

The optionally hydrogenated nitrile rubbers that are essential to the invention contain repeat units of at least one $\alpha,\beta$-unsaturated nitrile monomer, of at least one conjugated diene monomer and of at least one free-radically polymerizable compound having at least three olefinic double bonds per molecule. The use of the free-radically polymerizable compound having at least three olefinic double bonds per molecule as monomer typically leads to a certain precrosslinking of nitrile rubber. In addition, the nitrile rubber essential to the invention, in a further embodiment, may also include repeat units of one or more further copolymerizable monomers other than the free-radically polymerizable compound having at least three olefinic double bonds.

The $\alpha,\beta$-unsaturated nitrile monomer used may be any known $\alpha,\beta$-unsaturated nitrile monomer, preference being given to $(C_3-C_5)$ $\alpha,\beta$-unsaturated nitriles, more preferably acrylonitrile, methacrylonitrile, ethacrylonitrile or mixtures thereof. Acrylonitrile is especially preferred.

The repeat units in the nitrile rubber that are based on the at least one conjugated diene monomer preferably derive from $(C_4-C_6)$ conjugated dienes. Particular preference is given to 1,2-butadiene, 1,3-butadiene, isoprene, 2,3-dimethylbutadiene, piperylene or mixtures thereof. 1,3-Butadiene and isoprene or mixtures thereof are especially preferred. 1,3-Butadiene is very particularly preferred.

Typically, the repeat units in the nitrile rubber, with regard to the $\alpha,\beta$-unsaturated nitrile monomer, are based on acrylonitrile, methacrylonitrile, ethacrylonitrile or mixtures thereof, especially on acrylonitrile, and, with regard to the conjugated diene monomer, on a $C_4-C_6$ conjugated diene, preferably on 1,2-butadiene, 1,3-butadiene, isoprene, 2,3-dimethylbutadiene, piperylene or mixtures thereof, especially on 1,3-butadiene.

Useful free-radically polymerizable compounds containing at least three olefinic double bonds per molecule include at least triunsaturated compounds based on acrylates, methacrylates or itaconates of polyols, and based on acrylamides, and also at least triunsaturated compounds based on vinyl and allyl compounds. Preference is given to tri- and polyacrylates and tri- and polymethacrylates such as trimethylolpropane tri(meth)acrylate (TMPTMA), trimethylolethane tri(meth)acrylate (TMETMA), glycerol tri(meth)acrylate, pentaerythritol tri- and tetra(meth)acrylate, dipentaerythritol tri-, tetra-, penta- and hexa(meth)acrylate or dipentaerythritol tri-, tetra, penta- and hexaitaconate, sorbitol tetraacrylate and sorbitol hexamethacrylate. A preferred at least triunsaturated monomer of the acrylamides is diethylenetriaminetrismethacrylamide. Particular preference is given to trimethylolpropane tri(meth)acrylate.

Further copolymerizable monomers used, which must be different from the free-radically polymerizable compound having at least three olefinic double bonds, may, for example, be aromatic vinyl monomers, preferably styrene, $\alpha$-methylstyrene and vinylpyridine, and also non-conjugated dienes such as 4-cyanocyclohexene and 4-vinylcyclohexene, or else alkynes such as 1- or 2-butyne.

In addition, copolymerizable termonomers used may be monomers containing epoxy groups, preferably glycidyl acrylate and glycidyl methacrylate.

Alternatively, further copolymerizable monomers used may be copolymerizable termonomers containing carboxyl groups, for example $\alpha,\beta$-unsaturated monocarboxylic acids, esters thereof, $\alpha,\beta$-unsaturated dicarboxylic acids, mono- or diesters thereof or the corresponding anhydrides or amides thereof.

$\alpha,\beta$-Unsaturated monocarboxylic acids used may preferably be acrylic acid and methacrylic acid.

Also usable are esters of $\alpha,\beta$-unsaturated monocarboxylic acids, preferably the alkyl esters and alkoxyalkyl esters thereof. Preference is given to the alkyl esters, especially $C_1$-$C_{18}$-alkyl esters, of the $\alpha,\beta$-unsaturated mono-carboxylic acids. Particular preference is given to alkyl esters, especially $C_1$-$C_{18}$-alkyl esters, of acrylic acid or methacrylic acid, especially methyl acrylate, ethyl acrylate, propyl acrylate, n-butyl acrylate, tert-butyl acrylate, 2-ethylhexyl acrylate, n-dodecyl acrylate, methyl methacrylate, ethyl methacrylates, butyl methacrylate and 2-ethylhexyl methacrylate. Also preferred are alkoxyalkyl esters of $\alpha,\beta$-unsaturated monocarboxylic acids, more preferably alkoxyalkyl esters of acrylic acid or methacrylic acid, especially $C_2$-$C_{12}$-alkoxyalkyl esters of acrylic acid or of methacrylic acid, most preferably methoxymethyl acrylate, methoxyethyl (meth)acrylate, ethoxyethyl (meth)acrylate and methoxyethyl (meth)acrylate. Also usable are mixtures of alkyl esters, for example those mentioned above, with alkoxyalkyl esters, for example in the form of those mentioned above. Also usable are hydroxyalkyl acrylates and hydroxyalkyl methacrylate in which the number of carbon atoms in the hydroxyalkyl groups is 1-12, preferably 2-hydroxyethyl acrylate, 2-hydroxyethyl methacrylate and 3-hydroxypropyl acrylate; also usable are $\alpha,\beta$-unsaturated carboxylic esters containing amino groups, such as dimethylaminomethyl acrylate and diethylaminoethyl acrylate.

Further copolymerizable monomers used may also be $\alpha,\beta$-unsaturated dicarboxylic acids, preferably maleic acid, fumaric acid, crotonic acid, itaconic acid, citraconic acid and mesaconic acid.

It is also possible to use $\alpha,\beta$-unsaturated dicarboxylic anhydrides, preferably maleic anhydride, itaconic anhydride, citraconic anhydride and mesaconic anhydride.

It is also possible to use mono- and diesters of $\alpha,\beta$-unsaturated dicarboxylic acids.

These unsaturated $\alpha,\beta$- dicarboxylic mono- or diesters may, for example, be alkyl, preferably $C_1$-$C_{10}$-alkyl, especially ethyl, n-propyl, isopropyl, n-butyl, tert-butyl, n-pentyl or n-hexyl, alkoxyalkyl, preferably $C_2$-$C_{12}$-alkoxyalkyl, more preferably $C_3$-$C_8$-alkoxyalkyl, hydroxyalkyl, preferably $C_1$-$C_{12}$-hydroxyalkyl, more preferably $C_2$-$C_8$-hydroxyalkyl, cycloalkyl, preferably $C_5$-$C_{12}$-cycloalkyl, more preferably $C_6$-$C_{12}$-cycloalkyl, alkylcycloalkyl, preferably $C_6$-$C_{12}$-alkylcy-cloalkyl, more preferably $C_7$-$C_{10}$-alkylcycloalkyl, aryl, preferably $C_6$-$C_{14}$-aryl, mono- or diesters, where diesters may in each case also be mixed esters.

Particularly preferred alkyl esters of $\alpha,\beta$-unsaturated monocarboxylic acids are methyl (meth)acrylate, ethyl (meth)acrylate, propyl (meth)acrylate, n-butyl (meth)acrylate, t-butyl (meth)acrylate, hexyl (meth)acrylate, 2-ethylhexyl (meth)acrylate, octyl (meth)acrylate, 2-propylheptyl acrylate and lauryl (meth)acrylate. In particular, n-butyl acrylate is used.

Particularly preferred alkoxyalkyl esters of the $\alpha,\beta$-unsaturated monocarboxylic acids are methoxyethyl (meth) acrylate, ethoxyethyl (meth)acrylate and methoxyethyl (meth)acrylate. In particular, methoxyethyl acrylate is used.

Other esters of the $\alpha,\beta$- unsaturated monocarboxylic acids used are also, for example, polyethylene glycol (meth) acrylate, polypropylene glycol (meth)acrylate, N-(2-hydroxyethyl)acrylamides, N-(2-hydroxymethyl)acrylamides and urethane (meth)acrylate.

$\alpha,\beta$-Unsaturated dicarboxylic diesters used may be the analogous diesters based on the aforementioned monoester groups, where the ester groups may also be chemically different.

The proportions of conjugated diene and $\alpha.\beta$-unsaturated nitrile in the precrosslinked nitrile rubbers can vary within wide ranges. The proportion or sum total of the conjugated diene monomers is typically in the range from 20% to 95% by weight, preferably in the range from 45% to 90% by weight, more preferably in the range from 50% to 85% by weight, based on the overall polymer. The proportion or sum total of the $\alpha,\beta$-unsaturated nitrile monomers is typically 5% to 80% by weight, preferably 15% to 60% by weight, more preferably 18% to 50% by weight, even more preferably 20% to 45% by weight and especially 28% to 34% by weight, based on the overall polymer.

The proportion of the free-radically polymerizable compounds containing at least three olefinic double bonds per molecule is typically in the range from 0.1% to 25% by weight, preferably in the range from 0.25% to 15% by weight, more preferably in the range from 0.5% to 10% by weight and especially in the range from 0.5% to 5% by weight, based on the overall polymer.

The further copolymerizable monomers other than the free-radically polymerizable compound having at least three olefinic double bonds per molecule may be present in amounts of 0% to 40% by weight, preferably 0% to 30% by weight, more preferably 0% to 26% by weight, based on the overall polymer. In this case, corresponding proportions of the repeat units of the conjugated diene(s) and/or of the repeat units of the $\alpha,\beta$-unsaturated nitrile(s) are replaced by the proportions of these additional monomers, where the proportions of all repeat units of the monomers in the nitrile rubber still in each case add up to 100% by weight.

The proportions of the repeat units of conjugated diene, of $\alpha,\beta$-unsaturated nitrile, of free-radically polymerizable compounds containing at least three olefinic double bonds per molecule and of further copolymerizable monomers in the nitrile rubbers add up to 100% by weight in each case.

The nitrile content is determined via the nitrogen content, which is determined in the nitrile rubbers according to Kjeldahl as per DIN 53 625.

The rubbers have a Mooney viscosity ML 1+4 @100°C of 10 to 180 Mooney units (MU), preferably of 20 to 150 MU. Mooney viscosity ML 1+4@100°C is determined by means of a rotary disc viscometer to DIN 53523/3 or ASTM D 1646 at 100°C. Typically, this measurement is effected using non-calendered nitrile rubber samples.

The glass transition temperatures of the nitrile rubbers are in the range from -70°C to +10°C, preferably in the range of from -60°C to 0°C.

The degree of precrosslinking can be determined via the gel content. Using the analysis method as described in the examples part of this application, the precrosslinked nitrile rubbers usable for use according to the invention typically have a gel content of at least 60%, preferably of at least 65% and more preferably of 65% to 99%, especially of 70% to 98%.

Preference is given to precrosslinked nitrile rubbers as a basis for the pulverulent mixture that have repeat units of acrylonitrile, of 1,3-butadiene and of at least one free-radically polymerizable compound containing at least three olefinic double bonds per molecule. More preferably those having exclusively repeat units of acrylonitrile and 1,3-butadiene and trimethylolpropane di(meth)acrylate.

Particular preference is given to using one or more separating agents selected from the group consisting of silica, calcium carbonate, silicates, polyvinyl chloride and fatty acid salts.

The amount of the at least one separating agent in the pulverulent mixture according to the invention is typically within a range from 0.25 to 45 phr ("phr" means: "parts per hundred rubber"), preferably from 1 to 45 phr, more preferably from 2 to 25 phr, even more preferably from 3 to 20 phr, especially from 4 to 15 phr and especially preferably from 5 to 12 phr, based on the nitrile rubber (1).

The above-defined nitrile rubber is typically obtained by emulsion polymerization of at least one $\alpha,\beta$-unsaturated nitrile monomer, at least one conjugated diene and at least one free-radically polymerizable compound having at least three olefinic double bonds per molecule.

This emulsion polymerization is conducted in the presence of emulsifiers, which are typically water-soluble salts of anionic emulsifiers or else neutral emulsifiers. In addition, polymerization is frequently effected in the presence of what are called molecular weight regulators, in order to influence the molecular weight and polymer structure.

The polymerization is performed by metering in all or individual components of the initiator system at the start of the polymerization and/or during polymerization. Preference is given to the addition of all and individual components in portions during the polymerization. It is possible to control the reaction rate by sequential addition. A uniform progression of the polymerization can be achieved by using just a portion of the initiator system for the initiation of the polymerization and metering in the rest during the polymerization. In that case, the polymerization is typically initiated with 10% to 80% by weight, preferably 30%-50% by weight, of the total amount of initiator. It is also possible to meter in individual constituents of the initiator system.

If the intention is to produce chemically uniform products, the monomers are metered in. Acrylonitrile and butadiene in particular are metered in when the composition is outside the azeotropic butadiene/acrylonitrile ratio. Preferably, metered addition is effected in the case of NBR types with acrylonitrile contents of 10% to 34% by weight and in the case of the types with 40% to 50% by weight of acrylonitrile (W. Hofmann, "Nitrilkautschuk" [Nitrile Rubber], Berliner Union, Stuttgart, 1965, pages 58-66).

The free-radically polymerizable compounds containing at least three olefinic double bonds per molecule are typically not metered in but initially charged in full at the start of the polymerization. Alternatively, it is optionally possible to meter in these compounds.

The polymerization time is in the range from 1 h to 25 h, preferably 2 to 25 h, and depends essentially on the acrylonitrile content of the monomer mixture and on the polymerization temperature.

The polymerization temperature is typically in the range from 0°C to 50°C, preferably from 5°C to 45°C.

The amount of water used in the emulsion polymerization is in the range from 50 to 900 parts by weight, preferably in the range from 75 to 500 parts by weight, more preferably in the range from 90 to 400 parts by weight, of water, based on 100 parts by weight of the monomer mixture.

It is essential for the obtaining of the nitrile rubbers that the polymerization is conducted up to a conversion of at least 80%, based on the monomer mixture used. Preferably, the polymerization is conducted up to a conversion in the range from 82% to 100%, more preferably 85% to 100%, especially 88% to 100%, especially preferably 90% to 100%. The polymerization is ended on attainment of this conversion. For this purpose, a stopper is added to the reaction mixture.

The polymerization can be conducted either batchwise or else continuously in a stirred tank cascade. Unconverted monomers and volatile constituents can be removed by subjecting the short-stopped latex to a steam distillation. Temperatures in the range from 70°C to 150°C are employed here, with reduced pressure at temperatures < 100°C. Prior to the removal of the volatile constituents, the latex can be restabilized with emulsifier. For this purpose, appropriately, the emulsifiers used above are used in amounts of 0.1% to 2.5% by weight, preferably 0.5% to 2.0% by weight, based on 100 parts by weight of nitrile rubber.

Emulsifiers used may be water-soluble salts of anionic emulsifiers or else neutral emulsifiers. Preference is given to using anionic emulsifiers.

Anionic emulsifiers used may be modified resin acids that are obtained by dimerization, disproportionation, hydrogenation and modification of resin acid mixtures containing abietic acid, neoabietic acid, palustric acid, levopimaric acid. A particularly preferred modified resin acid is disproportionated resin acid (Ullmann's Encyclopedia of Industrial Chemistry, 6th edition, volume 31, p. 345-355).

Anionic emulsifiers used may also be fatty acids. These contain 6 to 22 carbon atoms per molecule. They may be fully saturated or else contain one or more double bonds in the molecule. Examples of fatty acids are caproic acid, lauric acid, myristic acid, palmitic acid, stearic acid, oleic acid, linoleic acid, linolenic acid. The carboxylic acids are typically based on oils or fats of specific origin, for example castor oil, cottonseed, peanut oil, linseed oil, coconut fat, palm kernel oil, olive oil, rapeseed oil, soybean oil, fish oil and bovine tallow etc. (Ullmann's Encyclopedia of Industrial Chemistry, 6th edition, volume 13, p. 75-108). Preferred carboxylic acids derive from coconut fatty acid and from bovine tallow, and are partly or fully hydrogenated.

Such carboxylic acids based on modified resin acids or fatty acids are used in the form of water-soluble lithium, sodium, potassium and ammonium salts. The sodium and potassium salts are preferred.

Anionic emulsifiers are also sulfonates, sulfates and phosphates that are bound to an organic radical. Useful organic radicals include aliphatic, aromatic, alkylated aromatics, fused aromatics, and methylene-bridged aromatics, where the methylene-bridged and fused aromatics may additionally have been alkylated. The length of the alkyl chains is 6 to 25 carbon atoms. The length of the alkyl chains bonded to the aromatic systems is between 3 and 12 carbon atoms.

The sulfates, sulfonates and phosphates are used in the form of lithium, sodium, potassium and ammonium salts. The sodium, potassium and ammonium salts are preferred.

Examples of such sulfonates, sulfates and phosphates are sodium laurylsulfate, sodium alkylsulfonate, sodium alkylarylsulfonate, sodium salts of methylene-bridged arylsulfonates, sodium salts of alkylated naphthalenesulfonates and the sodium salts of methylene-bridged naphthalenesulfonates, which may also be oligomerized, where the degree of oligomerization is between 2 to 10. Typically, the alkylated naphthalenesulfonic acids and methylene-bridged (and optionally alkylated) naphthalenesulfonic acids are in the form of isomer mixtures that may also contain more than 1 sulfo group (2 to 3 sulfo groups) in the molecule. Particular preference is given to sodium laurylsulfate, sodium alkylsulfonate mixtures having 12 to 18 carbon atoms, sodium alkylarylsulfonates, sodium diisobutylenenaphthalenesulfonate, methylene-bridged polynaphthalenesulfonate mixtures and methylene-bridged arylsulfonate mixtures.

Neutral emulsifiers derive from addition products of ethylene oxide and propylene oxide onto compounds having sufficiently acidic hydrogen. These include, for example, phenol, alkylated phenol and alkylated amines. The average degrees of polymerization of the epoxides are between 2 to 20. Examples of neutral emulsifiers are ethoxylated nonylphenols having 8, 10 and 12 ethylene oxide units. The neutral emulsifiers are typically not used alone, but in combination with anionic emulsifiers.

Preference is given to the potassium and sodium salts of disproportionated abietic acid and of partly hydrogenated tallow fatty acid, and mixtures thereof, sodium laurylsulfate, sodium alkylsulfonates, sodium alkylbenzenesulfonate, and alkylated and methylene-bridged naphthalenesulfonic acids.

The emulsifiers are used in a total amount of 0.2-15 parts by weight, preferably 0.5-12.5 parts by weight, more preferably 1.0-10 parts by weight, based on 100 parts by weight of the monomer mixture.

The emulsion polymerization is conducted using the emulsifiers mentioned. If, on conclusion of the polymerization, latices that have a tendency to premature self-coagulation owing to a certain instability are obtained, the emulsifiers mentioned can also be used for restabilization of the latices. This may especially be necessary prior to the removal of unconverted monomers by treatment with steam and prior to latex storage.

Polymerization is frequently effected in the presence of what are called molecular weight regulators, in order to influence the molecular weight and polymer structure. These are typically a compound selected from the group consisting of mercaptans containing at least one SH group, mercapto alcohols containing at least one SH group and at least one OH group, mercapto carboxylic acids containing at least one SH group and at least one carboxyl group, and mercapto carboxylic esters containing at least one SH group and at least one carboxylic ester group, thiocarboxylic acids, disulfides, polysulfides, thiourea, allyl compounds, aldehydes, aliphatic halohydrocarbons, araliphatic halohydrocarbons and saccharin. Preference is given to using alkyl thiols containing 9-16 carbon atoms, more preferably tert-dodecyl mercaptans (t-DDM) or tert-nonyl mercaptans (t-NM). Such alkyl thiols or (isomer) mixtures of alkyl thiols are either commercially available or else preparable by the person skilled in the art by methods that are described adequately in the literature.

The emulsion polymerization is typically initiated using polymerization initiators that break down to free radicals. These include compounds that contain an -O-O- unit (peroxo compounds) or an -N=N- unit (azo compound).

The peroxo compounds include hydrogen peroxide, peroxodisulfates, peroxodiphosphates, hydroperoxides, peracids, peresters, peracid anhydrides and peroxides having two organic radicals. Suitable salts of peroxodisulfuric acid and of peroxodiphosphoric acid are the sodium, potassium and ammonium salts. Suitable hydroperoxides are, for example, t-butyl hydroperoxide, cumene hydroperoxide and p-menthane hydroperoxide. Suitable peroxides having two organic radicals are dibenzoyl peroxide, 2,4-dichlorobenzoyl peroxide, di-t-butyl peroxide, dicumyl peroxide, t-butyl perbenzoate, t-butyl peracetate etc. Suitable azo compounds are azobisisobutyronitrile, azobisvaleronitrile and azobiscyclohexanenitrile.

Hydrogen peroxide, hydroperoxides, peracids, peresters, peroxodisulfate and peroxodiphosphate are also used in combination with reducing agents. Suitable reducing agents are sulfenates, sulfinates, sulfoxylates, dithionite, sulfite, metabisulfite, disulfite, sugar, urea, thiourea, xanthates, thioxanthates, hydrazinium salts, amines and amine derivatives such as aniline, dimethylaniline, monoethanolamine, diethanolamine or triethanolamine. Initiator systems consisting of an oxidizing agent and a reducing agent are referred to as redox systems. When redox systems are used, salts of transition metal compounds such as iron, cobalt or nickel are frequently additionally used in combination with suitable complexing agents such as sodium ethylenediaminetetraacetate, sodium nitrilotriacetate and trisodium phosphate or tetrapotassium diphosphate.

Preferred redox systems are, for example:

1) potassium peroxodisulfate in combination with triethanolamine,
2) ammonium peroxodiphosphate in combination with sodium metabisulfite ($Na_2S_2O_5$),
3) p-menthane hydroperoxide / sodium formaldehydesulfoxylate in combination with iron(II) sulfate ($FeSO_4 \cdot 7\,H_2O$), sodium ethylenediaminoacetate and trisodium phosphate,
4) cumene hydroperoxide / sodium formaldehydesulfoxylate in combination with iron(II) sulfate ($FeSO_4 \cdot 7\,H_2O$), sodium ethylenediaminoacetate and tetrapotassium diphosphate,
5) pinane hydroperoxide / sodium formaldehydesulfoxylate in combination with iron(II) sulfate ($FeSO_4 \cdot 7\,H_2O$), sodium ethylenediaminoacetate and trisodium phosphate.

The amount of oxidizing agent is 0.001 to 1 part by weight based on 100 parts by weight of monomer. The molar amount of reducing agent is between 50% and 500% based on the molar amount of the oxidizing agent used.

The molar amount of complexing agent is based on the amount of transition metal used and is typically equimolar therewith.

The polymerization is performed by metering in all or individual components of the initiator system at the start of the polymerization or during polymerization.

Preference is given to the addition of all and individual components of the activator system in portions during the polymerization. It is possible to control the reaction rate by the sequential addition.

## Stoppers:

Suitable examples of these are dimethyldithiocarbamate, sodium nitrite, mixtures of dimethyldithiocarbamate and sodium nitrite, hydrazine and hydroxylamine, and salts derived therefrom, such as hydrazinium sulfate and hydroxylammonium sulfate, diethylhydroxylamine, diisopropylhydroxylamine, water-soluble salts of hydroquinone, sodium dithionite, phenyl-$\alpha$-naphthylamine and aromatic phenols such as tert-butylcatechol, or phenothiazine.

For reduction of the viscosity during the polymerization, for adjustment of pH and as a pH buffer, salts may be added to the aqueous phase in the emulsion polymerization. Typical salts are salts of monovalent metals in the form of potassium hydroxide and sodium hydroxide, sodium sulfate, sodium carbonate, sodium hydrogencarbonate, sodium chloride and potassium chloride. Preference is given to sodium hydroxide and potassium hydroxide, sodium hydrogencarbonate and potassium chloride. The amounts of these electrolytes are in the range from 0 to 1 part by weight, preferably 0 to 0.5 part by weight, based on 100 parts by weight of the monomer mixture.

The polymerization can be conducted either batch wise or else continuously in a stirred tank cascade.

The preparation of the pulverulent mixture according to the invention can be effected by various routes and in each case comprises contacting the specific precrosslinked nitrile rubber (1) as defined above with the at least one separating agent (2).

Typically, the preparation of the pulverulent mixture according to the invention comprises either a grinding step (Route 1) or else a spray drying step (Route 2), in the course of each of which the contacting with the at least one separating agent is effected.

In the case of Route 1, the nitrile rubber (1) is first produced by emulsion polymerization, the resultant latex of the nitrile rubber is subjected to coagulation, and the resultant coagulated nitrile rubber is washed, dried and then subjected to a grinding step, wherein the at least one separating agent is added in one or more portions during the grinding operation.

In the case of Route 2, the nitrile rubber (1) is first likewise produced by emulsion polymerization, the resultant latex of the nitrile rubber, for the purpose of removing the water, is then subjected to spray drying in a spray tower, and the at least one separating agent is either supplied to the spray tower as dry powder or else metered directly into the latex prior to the spray drying.

**Route 1,** after the emulsion polymerization, comprises coagulation of the latex, subsequent washing and drying of the coagulated nitrile rubber with isolation of rubber crumbs, optionally compression to rubber bales and finally comminution and grinding of the rubber bales or crumbs by mechanical treatment, which can optionally be effected in

**EP 3 902 855 B1**

multiple stages. It is possible, for example, to undertake coarse grinding in a first step and fine grinding, also called micronization, in the second step. The addition of the at least one separating agent is typically effected during the grinding operation and can be effected in one portion or else incrementally in different portions.

In this embodiment, the pulverulent mixtures according to the invention that are obtained preferably have an average particle diameter $D_a$ in the range from 0.05 mm to 3 mm, more preferably in the range from 0.08 mm to 2 mm, in particular in the range from 0.10 mm to 1.75 mm and especially preferably in the range from 0.10 mm to 1.5 mm.

The pulverulent mixtures based on precrosslinked nitrile rubber and separating agent that are thus obtained are storage-stable over several months in relation to their polymer properties and with regard to their particle size distribution.

Before or during the coagulation, one or more ageing stabilizers may be added to the latex. Suitable ageing stabilizers for this purpose are phenolic, aminic or other ageing stabilizers.

Suitable phenolic ageing stabilizers are alkylated phenols, styrenized phenol (CAS No. 61788-44-1), sterically hindered phenols such as 2,6-di-tert-butylphenol, 2,6-di-tert-butyl-p-cresol (Vulkanox BHT, CAS No. 000128-37-0), 2,6-di-tert-butyl-4-ethylphenol, 2,2'-methylenebis(6-tert-butyl)-p-cresol (Vulkanox BKF, CAS No. 119-47-1), poly(dicyclopentadiene-co-p-cresol), sterically hindered phenols containing ester groups, such as n-octadecyl (beta)-(4-hydroxy-3,5-di-tert-butylphenyl)propionate, thioether-containing sterically hindered phenols, 2,2'-methylenebis(4-methyl-6-tert-butylphenol) (BPH), 2-methyl-4,6-bis(octylsulfanylmethyl)phenol and sterically hindered thiobisphenols. In further embodiments, two or more ageing stabilizers are also added, for example a mixture of n-octadecyl β-(4-hydroxy-3,5-di-tert-butylphenyl)propionate, poly(dicyclopentadiene-co-p-cresol) and 2-methyl-4,6-bis(octylsulfanylmethyl)phenol, preferably in a ratio of 1:1:1.

If discoloration of the rubber is immaterial, aminic ageing stabilizers, for example mixtures of diaryl-p-phenylenediamines (DTPD), octylated diphenylamine (ODPA), phenyl-α-naphthylamine (PAN), phenyl-β-naphthylamine (PBN), preferably those based on phenylenediamine, are also used. Examples of phenylenediamines are *N*-isopropyl-*N*'-phenyl-*p*-phenylenediamine, *N*-1,3-dimethylbutyl-*N*'-phenyl-*p*-phenylenediamine (6PPD), *N*-1,4-dimethylpentyl-*N*'-phenyl-*p*-phenylenediamine (7PPD), *N,N*'-bis-1,4-(1,4-dimethylpentyl)-*p*-phenylenediamine (77PD) etc.

Other ageing stabilizers include phosphites such as tris(nonylphenyl) phosphite, polymerized 2,2,4-trimethyl-1,2-dihydroquinoline (TMQ), 2-mercaptobenzimidazole (MBI), methyl-2-mercaptobenzimidazole (MMBI), zinc methylmercaptobenzimidazole (ZMMBI). The aforementioned other ageing stabilizers are often used in combination with phenolic ageing stabilizers. The other ageing stabilizers TMQ, MBI and MMBI are used, inter alia, for NBR types that are peroxidically vulcanized.

For the coagulation, the latex is adjusted to a pH known to those skilled in the art, namely by addition of a base, preferably ammonia or sodium hydroxide or potassium hydroxide, or an acid, preferably sulfuric acid or acetic acid.

In one embodiment of the process, the coagulation is performed using at least one salt selected from the group consisting of aluminium, calcium, magnesium, sodium, potassium and lithium salts. Monovalent or divalent anions are typically used as the anions of these salts. Preference is given to halides, particular preference to chloride, nitrate, sulfate, hydrogencarbonate, carbonate, formate and acetate.

Suitable examples are sodium chloride, potassium chloride, calcium chloride, magnesium chloride, sodium nitrate, potassium nitrate, sodium sulfate, potassium sulfate, sodium hydrogencarbonate, potassium hydrogencarbonate, sodium carbonate, potassium carbonate, aluminium sulfate, potassium aluminium sulfate (potassium alum), sodium aluminium sulfate (sodium alum), sodium acetate, calcium acetate and calcium formate. If a water-soluble calcium salt is used for the latex coagulation, calcium chloride is preferred.

The salts are added in an amount of 0.05% to 10% by weight, preferably 0.1% to 8% by weight, particularly preferably 0.2% to 5% by weight, based on the solids content of the latex dispersion.

In addition to at least one salt from the group defined above, precipitation assistants may also be used in the coagulation. Suitable precipitation assistants include water-soluble polymers for example. These are nonionic, anionic or cationic.

Examples of nonionic polymeric precipitation assistants are modified celluloses such as hydroxyalkylcellulose or methylcellulose and adducts of ethylene oxide and propylene oxide onto compounds bearing acidic hydrogen. Examples of compounds bearing acidic hydrogen are: fatty acid, sugars such as sorbitol, mono- and diglycerides of fatty acid, phenol, alkylated phenols, (alkyl)phenol/formaldehyde condensates etc. The addition products of ethylene oxide and propylene oxide onto these compounds may have a random or block construction. Of these products, preference is given to those having decreasing solubility with increasing temperature.

Examples of anionic polymeric precipitation assistants are homopolymers and copolymers of (meth)acrylic acid, maleic acid, maleic anhydride etc. The sodium salt of polyacrylic acid is preferred.

Cationic polymeric precipitation assistants are typically based on polyamines and on homo- and copolymers of (meth)acrylamide. Polymethacrylamides and polyamines, especially based on epichlorohydrin and dimethylamine, are preferred. The amounts of polymeric precipitation assistants are 0.01 to 5 parts by weight, preferably 0.05 to 2.5 parts by weight, based on 100 parts by weight of nitrile rubber.

The use of other precipitation assistants is also conceivable. However, it is readily possible to perform the process

**10**

according to the invention in the absence of additional precipitation assistants.

The latex used for coagulation advantageously has a solids concentration in the range from 1% to 40%, preferably in the range from 5% to 35% and more preferably in the range from 15% to 30% by weight.

The latex coagulation is performed in the temperature range of 10°C to 110°C, preferably from 20°C to 100°C, particularly preferably 50°C to 98°C. The latex coagulation may be carried out continuously or discontinuously, preferably continuously.

In an alternative embodiment, the latex typically separated from unconverted monomers may also be treated with acids in a pH range of $\leq 6$, preferably $\leq 4$, more preferably 2, to precipitate the polymer.

All mineral and organic acids which allow adjustment to the chosen pH ranges may be used for the precipitation. It is preferable to employ mineral acids for the pH adjustment. The polymer is subsequently separated from the suspension in a manner customary to those skilled in the art. This too may be carried out continuously or discontinuously, preferably continuously.

After coagulation, the nitrile rubber is typically in the form of "crumbs". The washing of the coagulated NBR is therefore also known as crumb washing. For this wash it is possible to use either deionized water or non-deionized water. The wash is conducted at a temperature in the range from 15 to 90°C, preferably at a temperature in the range from 20 to 80°C. The amount of wash water is 0.5 to 20 parts by weight, preferably 1 to 10 parts by weight and more preferably 1 to 5 parts by weight, based on 100 parts by weight of nitrile rubber. More preferably, the rubber crumbs are subjected to a multistage wash, wherein the rubber crumbs are partly dewatered between the individual wash stages. The residual moisture of the crumbs between the individual washing stages is in the range from 5% to 50% by weight, preferably in the range from 7% to 25% by weight. The number of wash stages is typically 1 to 7, preferably 1 to 3. The washing is performed discontinuously or continuously. Preference is given to using a multistage continuous process, with preference for countercurrent washing for sparing use of water. On conclusion of the wash, it has been found to be useful to dewater the nitrile rubber crumbs. The pre-dewatered nitrile rubber is dried in a dryer; suitable examples are fluidized bed dryers or plate dryers. The drying temperatures are 80 to 150°C. Preference is given to drying with a temperature program, with lowering of the temperature toward the end of the drying operation.

Useful apparatuses and grinders for the comminution and grinding are those known to the person skilled in the art.

**Route 2** proceeds directly from the latex of the nitrile rubber obtained in the emulsion polymerization, which is a suspension of solid polymer particles in water typically stabilized by emulsifiers. The pulverulent elastomer is obtained directly from this latex by separating the water from the latex by means of spray drying of the polymer and obtaining the polymer in the form of a fine powder. The separating agent(s) is/are metered in as described below.

The spray drying of the latices from the emulsion polymerization is generally effected in customary spray towers. This is done by conveying the latex heated preferably to 15 to 100°C through pumps into the spray tower and spraying it, for example, via nozzles within the head of the tower, preferably at pressures of 50 to 500 bar, preferably 100 to 300 bar. In one embodiment, there is a reduced pressure in the spray tower in the range from 100 to 500 mbar, preferably 150 to 400 mbar. Hot air with an inlet temperature of preferably 100 to 350°C is fed in, for example in countercurrent, and evaporates the water. The powder falls downward and the dry powder is discharged at the foot of the tower. The at least one separating agent and optionally further additives, for example ageing stabilizers, antioxidants, optical brighteners etc., are likewise blown in at the head of the tower, preferably in the form of dry powders. They can also be wholly or partly mixed into the latex prior to the spray drying. The latices supplied to the spray tower preferably have solids concentrations of 10-60% by weight, more preferably 20-50% by weight and especially 30-50% by weight, based on the latex.

In this embodiment, the pulverulent mixtures according to the invention preferably have an average particle diameter $D_a$ in the range from 0.01 mm to 2 mm, more preferably in the range from 0.04 mm to 1 mm, especially preferably in the range from 0.06 mm to 0.75 mm and very especially preferably in the range from 0.08 mm to 0.6 mm.

By the two routes 1 and 2 described, it is possible to obtain the pulverulent mixtures according to the invention that bring the advantages mentioned in tyre treads with regard to rolling resistance, dry grip and wet skid resistance, with simultaneously excellent homogeneous mixing characteristics.

The invention therefore also provides for use of the pulverulent mixtures according to the invention for production of vulcanizable mixtures comprising at least one pulverulent mixture according to the invention and at least one crosslinker. It is optionally possible for one or more further typical additives or further rubbers to be present in the vulcanizable mixtures.

These vulcanizable mixtures are produced by mixing at least one pulverulent mixture according to the invention with at least one crosslinker. Examples of useful crosslinkers include peroxidic crosslinkers such as bis(2,4-dichlorobenzyl) peroxide, dibenzoyl peroxide, bis(4-chlorobenzoyl) peroxide, 1,1-bis-(t-butylperoxy)-3,3,5-trimethylcyclohexane, tert-butyl perbenzoate, 2,2-bis(tert-butylperoxy)butene, 4,4-di-tert-butylperoxy nonylvalerate, dicumyl peroxide, 2,5-dimethyl-2,5-di(tert-butylperoxy)hexane, tert-butyl cumyl peroxide, 1,3-bis(tert-butylperoxyisopropyl)benzene, di-tert-butyl peroxide and 2,5-dimethyl-2,5-di(tert-butylperoxy)-3-hexyne.

It may be advantageous to use not only peroxidic crosslinkers but also further additions capable of increasing the crosslinking yield: Suitable examples for this purpose include triallyl isocyanurate, triallyl cyanurate, trimethylolpropane tri(meth)acrylate, triallyl trimellitate, ethylene glycol dimethacrylate, butanediol dimethacrylate, trimethylolpropane trimethacrylate, zinc diacrylate, zinc dimethacrylate, 1,2-polybutadiene or N,N'-m-phenylenedimaleimide.

The total amount of the crosslinker(s) is typically in the range from 1 to 20 parts by weight, preferably in the range from 1.5 to 15 parts by weight and more preferably in the range from 2 to 10 parts by weight, based on 100 parts by weight of the nitrile rubber.

Crosslinkers used may also be sulfur in elemental soluble or insoluble form or sulfur donors.

Examples of useful sulfur donors include dimorpholyl disulfide (DTDM), 2-morpholinodithiobenzothiazole (MBSS). caprolactam disulfide, dipentamethylenethiuram tetrasulfide (DPTT) and tetramethylthiuram disulfide (TMTD).

Even in the case of sulfur vulcanization, it is possible to use further additions capable of increasing the crosslinking yield. In principle, crosslinking can also be effected with sulfur or sulfur donors alone.

Conversely, crosslinking can also be effected solely in the presence of the abovementioned additions, i.e. without addition of elemental sulfur or sulfur donors.

Suitable additions capable of increasing the crosslinking yield include for example dithiocarbamates, thiurams, thiazoles, sulfenamides, xanthates, guanidine derivatives, caprolactams and thiourea derivatives.

Dithiocarbamates used may be, for example: ammonium dimethyldithiocarbamate, sodium diethyldithiocarbamate (SDEC), sodium dibutyldithiocarbamate (SDBC), zinc dimethyldithiocarbamate (ZDMC), zinc diethyldithiocarbamate (ZDEC), zinc dibutyldithiocarbamate (ZDBC), zinc ethylphenyldithiocarbamate (ZEPC), zinc dibenzyldithiocarbamate (ZBEC), zinc pentamethylenedithiocarbamate (Z5MC), tellurium diethyldithiocarbamate, nickel dibutyldithiocarbamate, nickel dimethyldithiocarbamate and zinc diisononyldithiocarbamate.

Thiurams used may be, for example: tetramethylthiuram disulfide (TMTD), tetramethylthiuram monosulfide (TMTM), dimethyldiphenylthiuram disulfide, tetrabenzylthiuram disulfide, dipentamethylenethiuram tetrasulfide and tetraethylthiuram disulfide (TETD).

Thiazoles used may be, for example: 2-mercaptobenzothiazole (MBT), dibenzothiazyl disulfide (MBTS), zinc mercaptobenzothiazole (ZMBT) and copper 2-mercaptobenzothiazole.

Sulfenamide derivatives used may be, for example: N-cyclohexyl-2-benzothiazyl sulfenamide (CBS), N-tert-butyl-2-benzothiazyl sulfenamide (TBBS), N,N'-dicyclohexyl-2-benzothiazyl sulfenamide (DCBS), 2-morpholinothiobenzothiazole (MBS), N-oxydiethylenethiocarbamyl-N-tert-butylsulfenamide and oxydiethylenethiocarbamyl-N-oxyethylenesulfenamide.

Xanthates used may be, for example: sodium dibutylxanthate, zinc isopropyldibutylxanthate and zinc dibutylxanthate.

Guanidine derivatives used may be, for example: diphenylguanidine (DPG), Di-o-tolylguanidine (DOTG) and o-tolyl biguanide (OTBG).

Dithiophosphates used may be, for example: zinc dialkyldithiophosphates (chain length of alkyl radicals $C_2$ to $C_{16}$), copper dialkyldithiophosphates (chain length of alkyl radicals $C_2$ to $C_{16}$) and dithiophosphoryl polysulfide.

Caprolactams used may be, for example, dithiobiscaprolactam.

Thiourea derivatives used may be, for example, N,N'-diphenylthiourea (DPTU), diethylthiourea (DETU) and ethylenethiourea (ETU).

Suitable additives likewise include, for example: zinc diamine diisocyanate, hexamethylenetetramine, 1,3-bis(citraconimidomethyl)benzene and cyclic disulfanes.

The additions mentioned and also the crosslinking agents may be used either individually or in mixtures. Preference is given to using the following substances for the crosslinking of the nitrile rubbers: sulfur, 2-mercaptobenzothiazole, tetramethylthiuram disulfide, tetramethylthiuram monosulfide, zinc dibenzyldithiocarbamate, dipentamethylenethiuram tetrasulfide, zinc dialkyldithiophosphate, dimorpholyl disulfide, tellurium diethyldithiocarbamate, nickel dibutyldithiocarbamate, zinc dibutyldithiocarbamate, zinc dimethyldithiocarbamate and dithiobiscaprolactam.

The crosslinking agents and aforementioned additives may each be used in amounts of about 0.05 to 10 parts by weight, preferably 0.1 to 8 parts by weight, especially 0.5 to 5 parts by weight (individual dosage, based in each case on the active substance), based on 100 parts by weight of the overall rubber.

In the case of the sulfur crosslinking according to the invention, it may be advisable under some circumstances, in addition to the crosslinking agents and abovementioned additives, also to use further inorganic or organic substances as well, for example: zinc oxide, zinc carbonate, lead oxide, magnesium oxide, saturated or unsaturated organic fatty acids and zinc salts thereof, polyalcohols, amino alcohols, for example triethanolamine, and amines, for example dibutylamine, dicyclohexylamine, cyclohexylethylamine and polyetheramines.

In addition, it is also possible to use scorch retardants. These include cyclohexylthiophthalimide (CTP), N,N' dinitrosopentamethylenetetramine (DNPT), phthalic anhydride (PTA) and diphenylnitrosamine. Preference is given to cyclohexylthiophthalimide (CTP).

As well as the addition of the crosslinker(s), the nitrile rubber according to the invention can also be mixed with further customary rubber additives and further rubbers that are not according to the invention.

The vulcanizable rubber compositions can be produced in a single-stage or multistage process, preference being given to 2 to 3 mixing stages.

The rubber additives include filler-activators, ageing stabilizers, reversion stabilizers, light stabilizers, antiozonants, reinforcing materials, processing aids, plasticizers, extender oils, tackifiers, blowing agents, dyes, pigments, waxes, resins, stretching agents, and further or other additives known in the rubber industry.

Examples of further rubbers not according to the invention that are used include natural rubbers and synthetic rubbers. The amount of further rubbers added is guided by the respective end use of the mixtures according to the invention. Examples of such synthetic rubbers are BR (polybutadiene), alkyl acrylate copolymers, IR (polyisoprene), E-SBR (styrene butadiene copolymers prepared by emulsion polymerization), S-SBR (styrene-butadiene copolymers prepared by solution polymerization), IIR (isobutylene-isoprene copolymers), NBR (butadiene-acrylonitrile copolymers), HNBR (partly hydrogenated or fully hydrogenated NBR rubber), EPDM (ethylene-propylene-diene terpolymers) and mixtures of these rubbers. Of particular interest for the production of tyres are natural rubber, E-SBR and S-SBR having a glass transition temperature above -60°C, polybutadiene rubber having a high cis content (> 90%) that has been produced with catalysts based on Ni, Co, Ti or Nd, and polybutadiene rubber having a vinyl content of up to 80%, and mixtures thereof. If present, the amount thereof is typically in the range from 0.5% to 95%, preferably 10% to 80%, based on the total amount of rubber in the rubber mixture.

Fillers used may, for example, be carbon black, finely divided silicas, barium sulfate, titanium dioxide, zinc oxide, metal carbonates such as calcium carbonate or magnesium carbonate, metal oxides such as magnesium oxide, aluminium oxide, iron oxide or calcium oxide, metal hydroxides such as aluminium hydroxide or magnesium hydroxide, metal sulfates such as calcium sulfate or barium sulfate, synthetic and natural silicates, diatomaceous earth, talc, kaolins, bentonites, carbon nanotubes, Teflon (the latter preferably in powder form), or glass fibres and glass fibre products. The amount of fillers is typically in the range of 1-500 parts by weight, preferably 1-250 parts by weight, more preferably 1 to 200 parts by weight, based on 100 parts by weight of the overall rubber.

The fillers mentioned may be used alone or in a mixture. In a preferred embodiment, the rubber compositions contain, as fillers, a mixture of light-coloured fillers, such as finely divided silicas, and carbon blacks, in which case the mixing ratio of light-coloured fillers to carbon blacks is 0.01:1 to 50:1, preferably 0.05:1 to 20:1.

Useful filler activators especially include organic silanes, for example vinyltrimethyloxysilane, vinyldimethoxymethylsilane, vinyltriethoxvsilane, vinyltris(2-methoxyethoxy)silane, N-cyclohexyl-3-aminopropyltrimethoxysilane, 3-aminopropyltrimethoxysilane, methyltrimethoxysilane, methyltriethoxysilane, dimethyldimethoxysilane, dimethyldiethoxysilane, trimethylethoxysilane, isooctyltrimethoxysilane, isooctyltriethoxysilane, hexadecyltrimethoxysilane or (octadecyl)methyldimethoxysilane. Further filler activators are, for example, interface-active substances such as triethanolamine and ethylene glycols having molecular weights of 74 to 10 000 g/mol. The amount of filler activators is typically 0 to 10 parts by weight, based on 100 parts by weight of the overall rubber.

Ageing stabilizers added to the vulcanizable mixtures may be those as already described in this application in connection with latex coagulation. They are typically used in amounts of 0 to 5 parts by weight, preferably 0.5 to parts by weight, based on 100 parts by weight of the overall rubber.

Examples of useful mould release agents include: Suitable and partly unsaturated fatty acids and oleic acids and derivatives thereof (fatty acid esters, fatty acid salts, fatty alcohols, fatty acid amides) that preferably find use as a mixture constituent, and also products applicable to the mould surface, for example products based on low molecular weight silicone compounds, products based on fluoropolymers and products based on phenolic resins.

The mould release agents are used as a mixture constituent in amounts of 0 to 10 parts by weight, preferably of 0.5 to 5 parts by weight, based on 100 parts by weight of the rubber.

Reinforcement with strength members (fibres) of glass according to the teaching of US-A-4,826,721 is also possible, as is reinforcement by chords, weaves, fibres of aliphatic and aromatic polyamides (Nylon®, Aramid®), polyesters and natural fibre products.

Examples of useful extender oils include DAE (distillate aromatic extract), TDAE (treated distillate aromatic extract), MES (mild extraction solvates), RAE (residual aromatic extract), TRAE (treated residual aromatic extract), naphthenic oils and heavy naphthenic oils.

The total amount of rubber additives is in the range from 1 to 300 parts by weight, based on 100 parts by weight of overall rubber. Preference is given to using amounts within a range from 5 to 150 parts by weight of rubber additives.

The invention further provides a process for producing vulcanizates by subjecting the above-described vulcanizable mixture to a vulcanization, and the vulcanizates. The vulcanizates are preferably produced in a shaping process, preferably employing rolls, kneaders, internal mixers and mixing extruders, calenders and mould presses.

The invention further provides for the use of the vulcanizable mixture according to the invention for production of shaped articles, preferably for the production of tyres, especially tyre treads, having particularly low rolling resistance coupled with high wet skid resistance and dry grip, which are obtainable by the aforementioned vulcanization process.

Alternatively, the vulcanizable mixtures according to the invention can also be used to produce other shaped articles, for example for the production of cable sheaths, hoses, drive belts, conveyor belts, roll coverings, footwear soles, gasket rings and damping elements.

The present invention is demonstrated by the following non-limiting examples.

EXAMPLES

I. Analyses

Acrylonitrile content - The nitrogen content for determination of the acrylonitrile content was determined in the nitrile rubbers (1) to DIN 53 625 according to Kjeldahl.

Mooney determination - The Mooney viscosity of the nitrile rubbers (1) in MU is determined according to ASTM D 1646 at 100°C.

Determination of gel content - To determine the gel content, 250 mg of the nitrile rubber were dissolved in 25 ml of the solvent specified (toluene or methyl ethyl ketone) with stirring at 25°C for 24 h. The insoluble fraction was removed by ultracentrifugation at 20 000 rpm at 25°C, dried and determined by gravimetry. Gel content is reported in % by weight based on the starting weight. Particle size determination - The particle size of the pulverulent mixture is determined by granulometry by the method specified in the description.

II. Production of the nitrile rubber latices L-A to L-J

As a basis for production of the mixtures according to the invention and of the comparative mixtures, ten different nitrile rubber latices L-A to L-J were produced.

These nitrile rubber latices L-A to L-J were produced continuously in a stirred tank cascade. After introduction of the monomers, the soap and the molecular weight regulator (each in the amounts specified in Table 1 based on 100 parts by weight of overall monomer), the reaction, after adjustment of the temperature of the reactor contents, was started by addition of aqueous solutions of iron(II) salts (in the form of premix solutions) and of para-menthane hydroperoxide (Trigonox® NT50). The reaction mixture was pumped through the stirred tank cascade and, on attainment of the desired conversion, stopped by adding an aqueous solution of diethylhydroxylamine in the last reactor. Unconverted monomers and other volatile constituents were removed by stripping under reduced pressure.

**Legend for the substances used according to Table 1:**

2) TMPTMA: CAS number 3290-92-4

3) Fatty acid: CAS number 67701-06-00

4) Resin acid: CAS number 61790-51-0

5) AOS: sodium α-olefinsulfonate

6) PNS: CAS number 9084-06-4 sodium poly(naphthaleneformaldehyde)sulfonate

7) sodium alkylsulfonate, CAS number 68188-18-1

8) t-DDM (tertiary dodecyl mercaptan); CAS number 25103-58-6

**Table 1: Production of the nitrile rubber latices L-A to L-J (nitrile rubber latices that are not suitable for use within the scope of the invention are identified by "(ni)")**

| Nitrile rubber latices | L-A (ni) | L-B (ni) | L-C (ni) | L-D (ni) | L-E | L-F | L-G (ni) | L-H | L-I | L-J (ni) |
|---|---|---|---|---|---|---|---|---|---|---|
| **Butadiene (total)** | 70 | 56 | 60 | 64 | 64 | 62.5 | 57.8 | 57.8 | 54.8 | 56 |
| **Acrylonitrile(total/increment)[1]** | 30/9 | 44/3 | 40 | 36/9 | 35 | 36/3 | 40.2 | 40.2 | 40.2 | 44/3 |
| **TMPTMA (total)[2]** | - | - | - | - | 1 | 1.5 | - | 2 | 5 | - |

(continued)

| Nitrile rubber latices | L-A (ni) | L-B (ni) | L-C (ni) | L-D (ni) | L-E | L-F | L-G (ni) | L-H | L-I | L-J (ni) |
|---|---|---|---|---|---|---|---|---|---|---|
| Divinylbenzene (DVB) (total) | - | - | - | - | - | - | 2 | - | - | - |
| Total amount of water | 200 | 220 | 90 | 200 | 95 | 90 | 220 | 120 | 120 | 220 |
| Fatty acid[3] | 1.8 | 1.8 | 2.3 | 1.5 | | 2.6 | 2.6 | 3.2 | 3.8 | 1.8 |
| Resin acid[4] | | | | 0.6 | | 0.9 | | | | |
| AOS[5] | | | | 0.4 | | | 0.8 | 0.8 | 0.8 | |
| PNS[6] | | | 1.5 | | | | | | | |
| Sodium alkylsulfonate[7] | | | | | 4.6 | | | 0.8 | | |
| t-DDM[8] (total/increment) | 0.4/0.12 | 0.54/0.16 | 0.35 | 0.31/0.13 | 0.75 | 0.68 | 1.55 | 1.1 | 1.55 | 0.58 |
| Polymerization temperature [°C] | 13 | 13 | 30-45 | 13 | 30-45 | 13 | 15 | 15 | 15 | 13 |
| Polymerization conversion [%] | 70 | 80 | 90 | 78 | 95 | 90 | 91 | 92 | 90 | 80 |
| 1) The increment was added at a monomer conversion of 36% | | | | | | | | | | |

III. Isolation of the nitrile rubbers A to J and production of the pulverulent mixtures from nitrile rubber and a separating agent (Examples 1 to 11):

Prior to the coagulation of the respective NBR latex, it was admixed in each case with a 50% dispersion of Vulkanox® BKF, Wingstay L or a 50% dispersion of a 1:1:1 mixture consisting of Irganox® 1520, Irganox® 1076 and Wingstay® L (see footnotes for Table 2).

The various latices were worked up either according to Route 1 or Route 2:

Route 1: The latex was either coagulated using calcium chloride and then the rubber crumbs obtained were washed in a separate vessel (Ex. L-B, L-D, L-F - L-J) or precipitated with the aid of sulfuric acid at a pH < 4 and the crumbs were then likewise washed in a separate vessel (Ex. L-A). These crumbs were mixed intimately with the amount of separating agent specified in each case. These mixtures were added gradually to a ZM 200 ultracentrifuge mill (Retsch®). The mill was equipped with an annular sieve of average mesh size 1 mm and was operated at a speed of 18 000 rpm. After grinding, the powders were removed from the grinding chamber by means of a cyclone and collected.

Route 2: The water was removed from the latex by means of spray drying from the polymer, and the polymer was obtained in the form of a fine powder. If a separating agent was added, it was metered into the spray tower as a dry powder.

Table 2: Pulverulent mixtures of NBR and a separating agent; Examples 1 to 11 (non-inventive mixtures are identified by a "(ni)")

| Pulverulent mixtures | 1 (ni) | 2 (ni) | 3 (ni) | 4 (ni) | 5 | 6 (ni) | 7 | 8 (ni) | 9 (ni) | 10 (ni) | 11 (ni) |
|---|---|---|---|---|---|---|---|---|---|---|---|
| Nitrile rubber | A | B | C | D | E | F | F | G | H | I | J |
| | | | | | | | | | | | |
| Workup | Route 1 | Route 1 | Route 2 | Route 1 | Route 2 | Route 1 | Route 1 | Route 1 | Route 1 | Route 1 | Route 1 |
| | | | | | | | | | | | |
| Vulkanox® BKF [1] | 0.3 | 0.3 | | 0.3 | | | | | | | 0.3 |
| Wingstay L [2] | | | 1.2 | | 1.1 | | | 0.7 | | | |
| Irganox1520/Irganox 1076/Wingstay L[3] | | | | | | 1.1 | 1.1 | | 1.3 | 1.3 | |
| | | | | | | | | | | | |
| Grinding | no | no | no | yes | no | no | yes | no | no | no | no |
| Separating agent (phr) | - | - | $CaCO_3$ (5.0) | Ca stearate[4] (6.0) | $CaCO_3$ (8.5) | - | PVC (10.0) | | | | |

1) 2-[(2-Hydroxy-5-methyl-3-tert-butyl-phenyl)methyl]-4-methyl-6-tert-butylphenol; Lanxess Deutschland GmbH 2) Reaction product of 4-methylphenol with dicyclopentadiene and isobutylene (CAS 68610-51-5) 3) 1:1:1 mixture of 2-methyl-4,6-bis[(octylthio)methyl]phenol (CAS 110553-27-0); reaction product of 4-methylphenol with dicyclopentadiene and isobutylene (CAS 68610-51-5); and octadecyl 3-(3,5-di-tert-butyl-4-hydroxyphenyl)propionate (CAS 2082-79-3) 4) calcium stearate, CAS number 68424-16-8

Table 3: Analysis of the pulverulent mixtures of NBR and a separating agent; Examples 1 to 11 (non-inventive mixtures are identified by "(ni)")

| Pulverulent mixtures | 1 (ni) | 2 (ni) | 3 (ni) | 4 (ni) | 5 | 6 (ni) | 7 | 8 (ni) | 9 (ni) | 10 (ni) | 11 (ni) |
|---|---|---|---|---|---|---|---|---|---|---|---|
| Nitrile rubber | A | B | C | D | E | F | F | G | H | I | J |
| Gel content (%)* | 0.3 (MEK) | 3.3 (MEK) | 82.8 (MEK) | 9.3 (MEK) | 90.2 (MEK) | 76.3 (MEK) | 74.5 (MEK) | 85.0 (MEK) | 89.9 (MEK) | 90.5 (MEK) | 2.9 (MEK) |
| $D_a$ (average particle diameter) (mm) | >10 | >10 | 0.116 | 0.628 | 0.183 | >10 | 0.26 | >10 | >10 | >10 | >10 |
| Mooney viscosity ML1+4@100°C (Mu) | 41 | 67 | 109 | 50 | 48 | 52 | 57 | 40 | 46 | 53 | 45 |
| ACN content (%) | 29.3 | 38.7 | 33.3 | 33.2 | 27.3 | 33.6 | 33.6 | 37.3 | 37.2 | 38.3 | 39.4 |
| * the solvent used in the determination of the gel content is specified in brackets in each case | | | | | | | | | | | |

IV. Production of vulcanizates V1-V12 from the mixtures

The pulverulent mixtures 1-11 and the reference without nitrile rubber were used as described hereinafter to produce vulcanizable mixtures and vulcanizates V1 to V12. The constituents of the vulcanizable mixtures are based on 100 parts rubber and are reported in Table 5.

The following properties were determined on the vulcanizates by the standards specified:

• **DIN 53513: Dynamic damping by means of Eplexor instrument**

For the determination of the dynamic properties (temperature dependence of the storage modulus E' within the temperature range of -60°C to 0°C and tan $\delta$ at 60°C), an Eplexor instrument (Eplexor 500 N) from Gabo-Testanlagen GmbH, Ahlden. Germany was used. The measurements were ascertained to DIN 53513 at 10 Hz on Ares strips within the temperature range of -100°C and +100°C at a heating rate of 1 K/min.

The method was used to obtain the following measurement parameters that are named according to ASTM 5992-96:

| tan $\delta$ (60°C): | loss factor (E''/E') at 60°C |
|---|---|
| tan $\delta$ (23°C) | loss factor (E''/E') at 23°C |
| tan $\delta$ (0°C): | loss factor (E''/E') at 0°C |

tan $\delta$ (60°C) is a measure of hysteresis loss on rolling of the tyre. The lower the tan $\delta$ (60°C), the lower the rolling resistance of the tyre.

tan $\delta$ (23°C) is a measure of grip on a dry road. The higher the tan $\delta$ (23°C), the better the grip on a dry road.

tan $\delta$ (0°C) is a measure of wet skid resistance. The higher the tan $\delta$ (0°C), the better the grip on a wet road.

• **DIN53513-1990: Elastic properties**

For the determination of the elastic properties, an MTS elastomer test system (MTS Flex Test) from MTS was used. The measurements were conducted to DIN53513-1990 on cylinder specimens (2 samples each of 20 x 6 mm) with total compression 2 mm at a temperature of 60°C and a measurement frequency of 1 Hz in the amplitude sweep range from 0.1% to 40%. The method was used to obtain the following measurement parameters that are named according to ASTM 5992-96:

**G\* (0.5%):** dynamic modulus at 0.5% amplitude sweep
**G\* (15%):** dynamic modulus at 15% amplitude sweep
**G\* (0.5%) - (15%):** differential in dynamic modulus at 0.5% to 15% amplitude sweep, which gives an indication of the Payne effect of the mixture, with a low value indicating good filler distribution.

The mixtures were produced in a Banbury mixer to ISO4658, section 5.2.3.3. For this purpose, the rubber and all the admixtures specified in Table 5 were each mixed in accordance with the mixing protocol from Table 4. The formulations were chosen such that the amount of extender oil in all the mixtures is the same in total. The NBR rubbers added were utilized as a substitute for the styrene-butadiene rubber.

### Table 4: Mixing protocol

| Mixing stage 1: | GK 1.5 / E |
|---|---|
| Kneader speed: **40** | |
| Ram pressure: 8 bar | |
| Temperature - paddle: **70°C** | |
| Temperature - trough: **70°C** | |
| Fill level: 72% | |
| | |
| 0 - 30s | Polymer |
| 30 - 90s | 2/3 silica, 2/3 silane, ageing stabilizer, stearic acid |
| 90 - 150 s | 1/3 silica, 1/3 silane, oil, carbon black |
| 210 s | Brush, |
| | reach 150°C and |
| 210 - 390 s. | mix, 150°C |
| | |
| **Mixing stage 2:** | **Roll (temperature 40°C)** |
| three times r/1, fold over three times (4 mm) | |
| | |
| **Mixing stage 3:** | **GK 1.5 / E** |
| Temperature - paddle: 70°C | |
| Temperature - trough: 70°C | |
| Fill level: about 72% | |
| 0-210 s | reach 150°C, then mix at 150°C for 3' |
| | |
| **Mixing stage 4:** | **Roll (temperature 40°C)** |
| three times r/l (4 mm) | |
| Sulfur, accelerator, ZnO | |
| three times r/l, fold over 5 x (4 mm) | |

Table 5: Composition of the vulcanizable mixtures for vulcanizates V1-V12 (noninventive vulcanizable mixtures are identified by "(ni)")

| Vulcanizable mixture/ vulcanizate obtained therefrom | V1 (ni) | V2 (ni) | V3 (ni) | V4 (ni) | V5 | V6 (ni) | V7 | V8 (ni) | V9 (ni) | V10 (ni) | V11 (ni) | V12 (ni) |
|---|---|---|---|---|---|---|---|---|---|---|---|---|
| BUNA® VSL 4526-2 HM | 89.51 | 89.51 | 89.51 | 89.51 | 89.51 | 89.51 | 89.51 | 96.39 | 89.51 | 89.51 | 89.51 | 89.51 |
| BUNA® CB 24 | 30 | 30 | 30 | 30 | 30 | 30 | 30 | 30 | 30 | 30 | 30 | 30 |
| VULCAN® J/N375 | 7 | 7 | 7 | 7 | 7 | 7 | 7 | 7 | 7 | 7 | 7 | 7 |
| ULTRASIL® 7000 GR | 90 | 90 | 90 | 90 | 90 | 90 | 90 | 90 | 90 | 90 | 90 | 90 |
| VIVATEC® 500 | 11.79 | 11.79 | 11.79 | 11.79 | 11.79 | 11.79 | 11.79 | 9.9 | 11.79 | 11.79 | 11.79 | 11.79 |
| EDENOR® C 18 98-100 | 1 | 1 | 1 | 1 | 1 | 1 | 1 | 1 | 1 | 1 | 1 | 1 |
| VULKANOX® 4020/LG | 2 | 2 | 2 | 2 | 2 | 2 | 2 | 2 | 2 | 2 | 2 | 2 |
| VULKANOX® HS/LG | 2 | 2 | 2 | 2 | 2 | 2 | 2 | 2 | 2 | 2 | 2 | 2 |
| ZINKWEISS ROTSIEGEL | 3 | 3 | 3 | 3 | 3 | 3 | 3 | 3 | 3 | 3 | 3 | 3 |
| ANTILUX® 654 | 1 | 1 | 1 | 1 | 1 | 1 | 1 | 1 | 1 | 1 | 1 | 1 |
| SI 69 | 7.2 | 7.2 | 7.2 | 7.2 | 7.2 | 7.2 | 7.2 | 7.2 | 7.2 | 7.2 | 7.2 | 7.2 |
| SULFUR ground 90/95° | 1.6 | 1.6 | 1.6 | 1.6 | 1.6 | 1.6 | 1.6 | 1.6 | 1.6 | 1.6 | 1,6 | 1,6 |
| RHENOGRAN® DPG-80 | 2.75 | 2.75 | 2.75 | 2.75 | 2.75 | 2.75 | 2.75 | 2.75 | 2.75 | 2.75 | 2.75 | 2.75 |
| VULKACIT® NZ/EGC | 1.6 | 1.6 | 1.6 | 1.6 | 1.6 | 1.6 | 1.6 | 1.6 | 1.6 | 1.6 | 1.6 | 1.6 |
| Pulverulent mixture 1 | 5 | | | | | | | | | | | |
| Pulverulent mixture 2 | | 5 | | | | | | | | | | |
| Pulverulent mixture 3 | | | 5 | | | | | | | | | |
| Pulverulent mixture 4 | | | | 5 | | | | | | | | |
| Pulverulent mixture 5 | | | | | 5 | | | | | | | |
| Pulverulent mixture 6 | | | | | | 5 | | | | | | |
| Pulverulent mixture 7 | | | | | | | 5 | | | | | |
| Pulverulent mixture 8 | | | | | | | | | 5 | | | |
| Pulverulent mixture 9 | | | | | | | | | | 5 | | |
| Pulverulent mixture 10 | | | | | | | | | | | 5 | |

(continued)

| Vulcanizable mixture/ vulcanizate obtained therefrom | V1 (ni) | V2 (ni) | V3 (ni) | V4 (ni) | V5 | V6 (ni) | V7 | V8 (ni) | V9 (ni) | V10 (ni) | V11 (ni) | V12 (ni) |
|---|---|---|---|---|---|---|---|---|---|---|---|---|
| Pulverulent mixture 11 | | | | | | | | | | | | 5 |

* the corresponding starting polymer was chosen in accordance with the vulcanizate number. As an example: polymer 1 gives vulcanizate V1, polymer 2 gives vulcanizate V2, etc.

The following additives according to **Table 6** were used here:

**Table 6: Additives for production of the vulcanizates**

| Substance | Manufacturer |
|---|---|
| VULCAN J/N375 (carbon black) | Cabot Corporation |
| ULTRASIL 7000 GR (silica) | Evonik Industries AG |
| VIVATEC® 500 (TDAE oil) | Hansen und Rosenthal KG |
| EDENOR® C 18 98-100 (stearic acid) | Caldic Deutschland GmbH |
| Buna ® VSL4526-2 HM (solution SBR, TDAE oil-extended, 37.7 phr) | Arlanxeo Deutschland GmbH |
| Buna ® CB 24 (neodymium high-cis polybutadiene) | Arlanxeo Deutschland GmbH |
| VULKANOX 4020/LG (stabilizer; CAS number: 000793-24-8) | Lanxess Deutschland GmbH |
| VULKANOX HS/LG (stabilizer; TMQ) | Lanxess Deutschland GmbH |
| SI 69 (silane) | Evonik Industries AG |
| ZINKWEISS ROTSIEGEL (zinc oxide) | Grillo Zinkoxid GmbH |
| 90/95 GROUND SULFUR (sulfur) | Avokal GmbH |
| RHENOGRAN DPG-80 (accelerator) | Lanxess Deutschland GmbH |
| VULKACIT NZ/EGC (accelerator) | Lanxess Deutschland GmbH |
| ANTILUX 654 (wax) | Lanxess Deutschland GmbH |

The vulcanizable mixtures obtained were first analysed for their Mooney viscosity. None of the pulverulent NBR-based mixtures added led to any significant change in Mooney viscosity by comparison with the reference mixture V8. These vulcanizable mixtures were vulcanized at 160°C for 20 min. The vulcanizates of these mixtures were then analysed for wet skid resistance (tan $\delta$ 0°C), dry grip (tan $\delta$ 23°C) and rolling resistance (tan $\delta$ 60°C), and for quality of filler distribution (G* (0.5%) - G* (15%)).

The noninventive vulcanizates V1, V2, V3 and V4 all show a positive rise in loss factor tan $\delta$ (23°C) (dry grip) compared to the reference vulcanizate V8, but there is a drop in loss factor tan $\delta$ (0°C) and hence in wet skid resistance, and also a rise in loss factor tan $\delta$ (60°C) and hence rolling resistance. However, there is also a rise in the differential between the dynamic moduli at 0.5% and 15% elongation in the amplitude sweep measurement, which suggests poorer filler distribution compared to the reference vulcanizate V8.

The noninventive vulcanizates V6 and V9 to V12 all show a rise in loss factor tan $\delta$ (23°C) (dry grip), and there is also a rise in loss factor tan $\delta$ (0°C) (except for V12) and hence in wet skid resistance, and also a rise in loss factor tan $\delta$ (60°C) and hence rolling resistance (except for V11). However, there is a substantial rise in the differential between the dynamic moduli at 0.5% and 15% elongation in the amplitude sweep measurement, which suggests poorer filler distribution compared to the reference vulcanizate V8.

The inventive vulcanizates of mixtures V5 and V7 which include the inventive mixture of nitrile rubber and at least one separating agent, by contrast, show not only a rise in loss factor tan $\delta$ (23°C), representing improved dry grip, but additionally also have a distinctly reduced loss factor tan $\delta$ (60°C) that represents rolling resistance, and the greatest increase in tan $\delta$ (0°C), which represents improved wet skid resistance. Furthermore. the vulcanizates of mixtures V5 and V7 show a reduced differential in the dynamic moduli at 0.5% and 15% elongation in the amplitude sweep measurement, which suggests better filler dispersion. Overall, exclusively the inventive vulcanizates V5 and V7 thus show the best values throughout for all relevant properties in combination.

**Table 7: Tests of vulcanizates V1-V12 (noninventive vulcanizates are identified by "(ni)")**

| | V1 (ni) | V2 (ni) | V3 (ni) | V4 (ni) | V5 | V6 (ni) | V7 (ni) | V8 (ni) | V9 (ne) | V10 (ni) | V11 (ni) | V12 (ni) |
|---|---|---|---|---|---|---|---|---|---|---|---|---|
| Mooney viscosity M 1+4@100°C (Mu) | 70 | 70 | 79 | 77 | 74 | 82 | 74 | 75 | 70 | 71 | 72 | 67 |
| tan $\delta$ (0°C) | 0.244 | 0.229 | 0.259 | 0.242 | 0.313 | 0.289 | 0.293 | 0.269 | 0.273 | 0.294 | 0.284 | 0.234 |

(continued)

| | V1 (ni) | V2 (ni) | V3 (ni) | V4 (ni) | V5 | V6 (ni) | V7 (ni) | V8 (ni) | V9 (ne) | V10 (ni) | V11 (ni) | V12 (ni) |
|---|---|---|---|---|---|---|---|---|---|---|---|---|
| tan δ (23°C) | 0.183 | 0.189 | 0.178 | 0.182 | 0.191 | 0.181 | 0.190 | 0.177 | 0.202 | 0.205 | 0.203 | 0.191 |
| tan δ (60°C) | 0.113 | 0.118 | 0.096 | 0.107 | 0.099 | 0.092 | 0.096 | 0.099 | 0.11 | 0.11 | 0.097 | 0.118 |
| G* (0.5%) - G* (15%) | 2.16 | 2.56 | 2.09 | 2.7 | 1.69 | 2.17 | 1.86 | 1.98 | 2.35 | 2.48 | 2.59 | 3.14 |

## Claims

1. Pulverulent mixture comprising

   (1) at least one nitrile rubber containing repeat units

   - of at least one $\alpha,\beta$-unsaturated nitrile monomer selected from the group consisting of acrylonitrile, methacrylonitrile, ethacrylonitrile and mixtures thereof,
   - of at least one conjugated diene monomer selected from the group consisting of 1,3-butadiene, isoprene, 2,3-dimethylbutadiene, piperylene and mixtures thereof, and
   - of at least one free-radically polymerizable compound having at least three olefinic double bonds per molecule wherein the free-radically polymerizable compound containing at least three olefinic double bonds per molecule is trimethylolpropane tri(meth)acrylate, wherein the proportion of the free-radically polymerizable compounds having at least three olefinic double bonds per molecule is in the range from 0.5% to 5% by weight, based on the overall polymer,

   and
   (2) at least one separating agent, wherein the at least one separating agent is selected from the group consisting of

   - silicas having a specific BET surface area of more than 5 $m^2/g$, which have especially been chemically modified,
   - silicates being talc, mica, bentonites or montmorillonites,
   - fatty acid salts being alkali metal and alkaline earth metal salts of fatty acids having more than 10 carbon atoms,
   - polymers having a high glass transition temperature of more than 60°C, and
   - mixtures of the aforementioned separating agents;
   wherein 0.25 to 45 phr of the at least one separating agent, based on the nitrile rubber, is used;
   wherein the pulverulent mixture has an average particle diameter $D_a$ in the range from 0.06 mm to 0.75 mm as described in the description; and
   the preparation of the pulverulent mixture comprises either a grinding step or else a spray drying step, in the course of each of which the contacting with the at least one separating agent is effected,
   in the case of the grinding step, the nitrile rubber is first produced by emulsion polymerization, the resultant latex of the nitrile rubber is subjected to coagulation, and the coagulated nitrile rubber is washed, dried and then subjected to grinding, where the at least one separating agent is added in one or more portions during the grinding operation,
   in the case of the spray drying step, the nitrile rubber is first produced by emulsion polymerization, the resultant latex of the nitrile rubber, for the purpose of removing the water, is subjected to spray drying in a spray tower, and the at least one separating agent is either supplied to the spray tower as dry powder or else metered directly into the latex prior to the spray drying.

2. Pulverulent mixture according to Claim 1, wherein the silicas have especially been chemically modified.

3. Pulverulent mixture according to Claim 1, wherein the nitrile rubber has been precrosslinked.

4. Pulverulent mixture according to any one of Claims 1 to 3, wherein the pulverulent mixture has an average particle diameter $D_a$ in the range from 0.08 mm to 0.6 mm.

5. Pulverulent mixture according to any one of Claims 1 to 3, wherein the $\alpha,\beta$-unsaturated nitrile monomer is acrylonitrile, and the conjugated diene monomer is 1,3-butadiene.

6. Process for producing the pulverulent mixture according to any one of Claims 1 to 5, wherein the nitrile rubber is contacted with the at least one separating agent.

7. Process according to Claim 6, wherein the nitrile rubber is first produced by emulsion polymerization, the resultant latex of the nitrile rubber is subjected to coagulation, and the coagulated nitrile rubber is washed, dried and then subjected to grinding, where the at least one separating agent is added in one or more portions during the grinding operation.

8. Process according to Claim 6, wherein the nitrile rubber is first produced by emulsion polymerization, the resultant latex of the nitrile rubber, for the purpose of removing the water, is subjected to spray drying in a spray tower, and the at least one separating agent is either supplied to the spray tower as dry powder or else metered directly into the latex prior to the spray drying.

9. Vulcanizable mixture comprising a pulverulent mixture according to any one of Claims 1 to 5 and at least one crosslinker.

10. Process for producing vulcanizable mixtures according to Claim 9, wherein the pulverulent mixture according to any one of Claims 1 to 5 is contacted with at least one crosslinker.

11. Process for producing vulcanizates, wherein the vulcanizable mixture according to Claim 9 is subjected to vulcanization.

12. Vulcanizates comprising crosslinked pulverulent mixtures, wherein the pulverulent mixtures are are as defined in claim 1.

13. Use of the vulcanizates according to Claim 12 in tyre treads.


**Patentansprüche**

1. Pulverförmige Mischung enthaltend

   (1) mindestens einen Nitrilkautschuk enthaltend Wiederholungseinheiten

   - mindestens eines $\alpha,\beta$-ungesättigten Nitrilmonomers, das aus der Gruppe bestehend aus Acrylnitril, Methacrylnitril, Ethacrylnitril und Mischungen davon ausgewählt ist,
   - mindestens eines konjugierten Dienmonomers, das aus der Gruppe bestehend aus 1,3-Butadien, Isopren, 2,3-Dimethylbutadien, Piperylen und Mischungen davon ausgewählt ist, und
   - mindestens einer radikalisch polymerisierbaren Verbindung mit mindestens drei olefinischen Doppelbindungen pro Molekül, wobei die radikalisch polymerisierbare Verbindung mit mindestens drei olefinischen Doppelbindungen pro Molekül Trimethylolpropantri(meth)acrylat ist, wobei der Anteil der radikalisch polymerisierbaren Verbindungen mit mindestens drei olefinischen Doppelbindungen pro Molekül im Bereich von 0,5 bis 5 Gew.-%, bezogen auf das Gesamtpolymer, liegt,

   und
   (2) mindestens ein Trennmittel, wobei das mindestens eine Trennmittel ausgewählt ist aus der Gruppe bestehend aus

   - Kieselsäuren mit einer spezifischen Oberfläche nach BET von mehr als 5 $m^2$/g, die insbesondere chemisch modifiziert sind,
   - Silikaten, bei denen es sich um Talk, Glimmer, Bentonite oder Montmorillonite handelt,
   - Fettsäuresalzen, bei denen es sich um Alkali- und Erdalkalimetallsalze von Fettsäuren mit mehr als 10 Kohlenstoffatomen handelt,
   - Polymeren mit hoher Glasübergangstemperatur von mehr als 60 °C und
   - Mischungen der vorgenannten Trennmittel;

wobei 0,25 bis 45 phr des mindestens einen Trennmittels, bezogen auf den Nitrilkautschuk, eingesetzt werden;

wobei die pulverförmige Mischung einen mittleren Partikeldurchmesser $D_a$ im Bereich von 0,06 mm bis 0,75 mm aufweist, wie in der Beschreibung beschrieben; und

die Herstellung der pulverförmigen Mischung entweder einen Mahlschritt oder aber einen Sprühtrocknungsschritt umfasst, im Rahmen derer jeweils das Inkontaktbringen mit dem mindestens einen Trennmittel erfolgt,

im Falle des Mahlschritts zunächst der Nitrilkautschuk durch Emulsionspolymerisation hergestellt wird, der dabei erhaltene Latex des Nitrilkautschuks einer Koagulation unterzogen wird und der koagulierte Nitrilkautschuk gewaschen, getrocknet und anschließend einer Mahlung unterzogen wird, wobei das mindestens eine Trennmittel während des Mahlvorgangs in einer oder mehreren Portionen zugegeben wird,

im Falle des Sprühtrocknungsschritts zunächst der Nitrilkautschuk durch Emulsionspolymerisation hergestellt wird, der dabei erhaltene Latex des Nitrilkautschuks zwecks Abtrennung des Wassers einer Sprühtrocknung in einem Sprühturm unterzogen wird und das mindestens eine Trennmittel entweder als trockenes Pulver dem Sprühturm zugeführt wird oder aber dem Latex bereits vor der Sprühtrocknung zudosiert wird.

2. Pulverförmige Mischung nach Anspruch 1, wobei die Kieselsäuren insbesondere chemisch modifiziert sind.

3. Pulverförmige Mischung nach Anspruch 1, wobei der Nitrilkautschuk vorvernetzt ist.

4. Pulverförmige Mischung nach einem der Ansprüche 1 bis 3, wobei die pulverförmige Mischung einen mittleren Teilchendurchmesser $D_a$ im Bereich von 0,08 mm bis 0,6 mm aufweist.

5. Pulverförmige Mischung nach einem der Ansprüche 1 bis 3, wobei es sich bei dem $\alpha,\beta$-ungesättigten Nitrilmonomer um Acrylnitril handelt und es sich bei dem konjugierten Dienmonomer um 1,3-Butadien handelt.

6. Verfahren zur Herstellung der pulverförmigen Mischung nach einem der Ansprüche 1 bis 5, bei dem man den Nitrilkautschuk mit dem mindestens einen Trennmittel in Kontakt bringt.

7. Verfahren nach Anspruch 6, wobei zunächst der Nitrilkautschuk durch Emulsionspolymerisation hergestellt wird, der dabei erhaltene Latex des Nitrilkautschuks einer Koagulation unterzogen wird und der koagulierte Nitrilkautschuk gewaschen, getrocknet und anschließend einer Mahlung unterzogen wird, wobei das mindestens eine Trennmittel während des Mahlvorgangs in einer oder mehreren Portionen zugegeben wird.

8. Verfahren nach Anspruch 6, wobei zunächst der Nitrilkautschuk durch Emulsionspolymerisation hergestellt wird, der dabei erhaltene Latex des Nitrilkautschuks zwecks Abtrennung des Wassers einer Sprühtrocknung in einem Sprühturm unterzogen wird und das mindestens eine Trennmittel entweder als trockenes Pulver dem Sprühturm zugeführt wird oder aber dem Latex bereits vor der Sprühtrocknung zudosiert wird.

9. Vulkanisierbare Mischung enthaltend eine pulverförmige Mischung nach einem der Ansprüche 1 bis 5 und mindestens einen Vernetzer.

10. Verfahren zur Herstellung von vulkanisierbaren Mischungen nach Anspruch 9, bei dem man die pulverförmige Mischung nach einem der Ansprüche 1 bis 5 mit mindestens einem Vernetzer in Kontakt bringt.

11. Verfahren zur Herstellung von Vulkanisaten, bei dem man die vulkanisierbare Mischung nach Anspruch 9 einer Vulkanisation unterzieht.

12. Vulkanisate enthaltend vernetzte pulverförmige Mischungen, wobei die pulverförmigen Mischungen wie in Anspruch 1 definiert sind.

13. Verwendung der Vulkanisate nach Anspruch 12 in Reifenlaufflächen.

**Revendications**

1. Mélange pulvérulent comprenant

   (1) au moins un caoutchouc nitrile contenant des unités répétitives

   - d'au moins un monomère de nitrile $\alpha,\beta$-insaturé choisi dans le groupe constitué de l'acrylonitrile, du méthacrylonitrile, de l'éthacrylonitrile et de leurs mélanges,
   - d'au moins un monomère de diène conjugué choisi dans le groupe constitué du 1,3-butadiène, de l'isoprène, du 2,3-diméthylbutadiène, du pipérylène et de leurs mélanges, et
   - d'au moins un composé polymérisable par des radicaux libres ayant au moins trois doubles liaisons oléfiniques par molécule où le composé polymérisable par des radicaux libres ayant au moins trois doubles liaisons oléfiniques par molécule est le tri(méth)acrylate de triméthylolpropane, où la proportion des composés polymérisables par des radicaux libres ayant au moins trois doubles liaisons oléfiniques par molécule est dans la plage de 0,5 à 5 % en poids, par rapport au polymère global,

   et
   (2) au moins un agent de séparation, l'au moins un agent de séparation étant choisi dans le groupe constitué des

   - silices présentant une surface spécifique BET supérieure à 5 $m^2/g$, qui ont été notamment modifiées chimiquement,
   - silicates qui sont le talc, le mica, les bentonites ou les montmorillonites,
   - sels d'acide gras qui sont des sels de métaux alcalins et de métaux alcalino-terreux d'acides gras ayant plus de 10 atomes de carbone,
   - polymères présentant une température de transition vitreuse élevée supérieure à 60 °C, et
   - mélanges des agents de séparation précités ;

     dans lequel 0,25 à 45 phr de l'au moins un agent de séparation, sur la base du caoutchouc nitrile, sont utilisés ;
     dans lequel le mélange pulvérulent a un diamètre moyen de particules $D_a$ compris dans la plage de 0,06 mm à 0,75 mm comme décrit dans la description ; et
     la préparation du mélange pulvérulent comprend soit une étape de broyage, soit encore une étape de séchage par pulvérisation, au cours de chacune desquelles on effectue la mise en contact avec l'au moins un agent de séparation, dans le cas de l'étape de broyage, le caoutchouc nitrile est d'abord produit par polymérisation en émulsion, le latex résultant du caoutchouc nitrile est soumis à une coagulation, et le caoutchouc nitrile coagulé est lavé, séché et ensuite soumis à un broyage, où l'au moins un agent de séparation est ajouté en une ou plusieurs portions au cours de l'opération de broyage,
     dans le cas de l'étape de séchage par pulvérisation, le caoutchouc nitrile est d'abord produit par polymérisation en émulsion, le latex résultant du caoutchouc nitrile, en vue d'éliminer l'eau, est soumis à un séchage par pulvérisation dans une tour de pulvérisation et l'au moins un agent de séparation est soit amené à la tour de pulvérisation sous forme de poudre sèche, soit dosé directement dans le latex avant le séchage par pulvérisation.

2. Mélange pulvérulent selon la revendication 1, dans lequel les silices ont notamment été modifiées chimiquement.

3. Mélange pulvérulent selon la revendication 1, dans lequel le caoutchouc nitrile a été préréticulé.

4. Mélange pulvérulent selon l'une quelconque des revendications 1 à 3, dans lequel le mélange pulvérulent a un diamètre moyen de particules $D_a$ compris dans la plage de 0,08 mm à 0,6 mm.

5. Mélange pulvérulent selon l'une quelconque des revendications 1 à 3, dans lequel le monomère de nitrile $\alpha,\beta$-insaturé est l'acrylonitrile, et le monomère de diène conjugué est le 1,3-butadiène.

6. Procédé de production du mélange pulvérulent selon l'une quelconque des revendications 1 à 5, dans lequel le caoutchouc nitrile est mis en contact avec l'au moins un agent de séparation.

7. Procédé selon la revendication 6, dans lequel le caoutchouc nitrile est d'abord produit par polymérisation en émulsion, le latex résultant du caoutchouc nitrile est soumis à une coagulation, et le caoutchouc nitrile coagulé est lavé, séché et ensuite soumis à un broyage, où l'au moins un agent de séparation est ajouté en une ou plusieurs portions pendant l'opération de broyage.

8. Procédé selon la revendication 6, dans lequel le caoutchouc nitrile est d'abord produit par polymérisation en émulsion, le latex résultant du caoutchouc nitrile, en vue d'éliminer l'eau, est soumis à un séchage par pulvérisation dans une tour de pulvérisation, et l'au moins un agent de séparation est soit amené à la tour de pulvérisation sous forme de poudre sèche, soit dosé directement dans le latex avant le séchage par pulvérisation.

9. Mélange vulcanisable comprenant un mélange pulvérulent selon l'une quelconque des revendications 1 à 5 et au moins un agent de réticulation.

10. Procédé de production de mélanges vulcanisables selon la revendication 9, dans lequel le mélange pulvérulent selon l'une quelconque des revendications 1 à 5 est mis en contact avec au moins un agent de réticulation.

11. Procédé de production de vulcanisats, dans lequel le mélange vulcanisable selon la revendication 9 est soumis à une vulcanisation.

12. Vulcanisats comprenant des mélanges pulvérulents réticulés, dans lesquels les mélanges pulvérulents sont tels que définis dans la revendication 1.

13. Utilisation des vulcanisats selon la revendication 12 dans des bandes de roulement de pneus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19701487 A1
- EP 0842708 A1
- CN 104193907 A
- CN 101643528 A
- JP 56163907 A
- DE 112012001835 T5
- CN 103965530 A
- EP 2882512 A
- US 2018079886 A
- EP 0669370 A
- US 4826721 A

### Non-patent literature cited in the description

- *Tire Industry*, 2013, vol. 33, 543-547
- Nitrilkautschuk. **W. HOFMANN**. Nitrile Rubber. Berliner Union, 1965, 58-66
- Ullmann's Encyclopedia of Industrial Chemistry, vol. 31, 345-355
- Ullmann's Encyclopedia of Industrial Chemistry, vol. 13, 75-108
- *CHEMICAL ABSTRACTS*, 61788-44-1
- *CHEMICAL ABSTRACTS*, 000128-37-0
- *CHEMICAL ABSTRACTS*, 119-47-1
- *CHEMICAL ABSTRACTS*, 3290-92-4
- *CHEMICAL ABSTRACTS*, 67701-06-00
- *CHEMICAL ABSTRACTS*, 61790-51-0
- *CHEMICAL ABSTRACTS*, 9084-06-4
- *CHEMICAL ABSTRACTS*, 68188-18-1
- *CHEMICAL ABSTRACTS*, 25103-58-6